# EUROPÄISCHE PATENTSCHRIFT

(11) **EP 1 161 618 B1**
(45) Veröffentlichungstag und Bekanntmachung des Hinweises auf die Patenterteilung: **07.05.2003**
(21) Anmeldenummer: 00918749.3
(22) Anmeldetag: 28.02.2000
(51) Int. Cl.: F01N 3/08, F02D 41/02

(54) **VERFAHREN ZUR DE-SULFATIERUNG EINES NOX-SPEICHERKATALYSATORS**
METHOD OF DESULFATING AN NOX STORAGE CATALYST
PROCEDE DE DESULFATAGE D'UN CATALYSEUR ACCUMULATEUR DE NOX

(30) Priorität: 11.03.1999 DE 19910664
(43) Veröffentlichungstag der Anmeldung: 12.12.2001
(73) Patentinhaber: Volkswagen Aktiengesellschaft, 38436 Wolfsburg (DE)
(72) Erfinder: POTT, Ekkehard, D-38518 Gifhorn (DE); HAHN, Hermann, D-38165 Lehre (DE)
(74) Vertreter: Gulde, Klaus W.
(86) Internationale Anmeldenummer: EP0001664
(87) Internationale Veröffentlichungsnummer: WO00053902

(56) Entgegenhaltungen:
- EP-A- 0 869 263
- EP-A- 0 893 154

## Beschreibung

Die vorliegende Erfindung betrifft ein Verfahren zur De-Sulfatierung eines einer mager betriebenen Brennkraftmaschine nachgeschalteten NOₓ-Speicherkatalysators gemäß dem Oberbegriff des Anspruchs 1.

Ein entsprechendes Verfahren ist aus der nachveröffentlichten deutschen Patentanmeldung 198 47 875.5 bzw. der WO 00/23702 bekannt, deren Offenbarungsgehalt voll inhaltlich in die vorliegende Beschreibung aufgenommen wird. Es dient zur Gewährleistung einer ordnungsgemäßen Funktionsweise des Katalysators durch rechtzeitige und wirkungsvolle De-Sulfatierung, ohne daß es hierbei zu einer spürbaren Veränderung des Betriebsverhaltens der zugeordneten Brennkraftmaschine kommt. Ergänzend sei auch auf die Lehre der deutschen Patentanmeldung 198 47 874.5 verwiesen, deren Offenbarungsgehalt ebenfalls voll inhaltlich in die vorliegende Beschreibung aufgenommen wird.

Die Aufgabe der vorliegenden Erfindung besteht in einer Verbesserung dieses bekannten Verfahrens im Hinblick auf eine zuverlässige Erfassung und rechtzeitige Behebung von Unregelmäßigkeiten der Katalysatoraktivität und eine Minimierung der erforderlichen De-Sulfatierungsvorgänge zur Verringerung der thermischen Belastung des Katalysators und der erforderlichen Eingriffe in das Betriebsverhalten der Brennkraftmaschine.

Diese Aufgabe wird erfindungsgemäß durch ein gattungsgemäßes Verfahren mit den im kennzeichnenden Teil des Anspruchs 1 angegebenen Merkmalen gelöst.

Bevorzugte Ausführungsformen dieses insbesondere für direkteinspritzende Ottomotoren oder Dieselmotoren geeigneten erfindungsgemäßen Verfahrens sind den zugehörigen Unteransprüchen zu entnehmen.

Bei dem vorliegenden Verfahren wird erfindungsgemäß die Einleitung einer auf Grund einer berechneten oder prognostizierten unzulässig hohen Schwefelbeladung des NOₓ-Speicherkatalysators gegebenenfalls erforderlichen De-Sulfatierung hinausgezögert, wenn die gemessenen Stickoxidemissionen eine vorbestimmte prognostizierte Stickoxidemission um zumindest einen bestimmten Betrag oder Schwellenwert unterschreiten. Die De-Sulfatierung wird hierbei zumindest bis zum Überschreiten des Schwellenwertes, insbesondere jedoch bis zum Erreichen des vorbestimmten maximal zulässigen Stickoxidemission, oder bis zum Auftreten des vorbestimmten charakteristischen Abweichmusters hinausgezögert, um unnötige Entschwefelungsvorgänge zu unterdrücken und die damit verbundene thermische Belastung des Katalysators zu minimieren. In diesem Fall ist von einem Betrieb mit schwefelarmen Kraftstoff auszugehen, d.h. ein Kraftstoff, dessen Schwefelgehalt wesentlich, insbesondere um mehr als 50 %, unter dem Schwefelgehalt des für der Modellbildung zugrundegelegten Kraftstoffs liegt, bei dem entsprechend weniger De-Sulfatierungsvorgänge erforderlich sind. Die Unterdrückung von De-Sulfatierungsvorgängen erfolgt hierbei vorzugsweise erst dann, wenn die erwähnten Abweichungen von der prognostizierten Stickoxidemission zumindest für eine bestimmte Zeitspanne auftreten.

Zur Messung der Stickoxidemissionen erfolgt entsprechend der Lehre der bereits genannten WO 00/23702 eine Emissionsüberwachung des aus dem Noₓ-Speicherkatalysator ausströmenden Abgases, wobei insbesondere dessen Stickoxidgehalt mittels eines dem Katalysator nachgeschalteten NOₓ-Sensors gemessen und zur Bestimmung von Unregelmäßigkeiten der Katalysatoraktivität mit einer das normale Betriebsverhalten des Katalysators charakterisierenden, vorbestimmten maximal zulässigen Stickoxidemission verglichen wird, die beispielsweise über Modellrechnungen oder Kennfelder aus den Betriebsbedingungen bestimmt wird.

Bei Überschreitung einer vorbestimmten maximal zulässigen Abweichung zwischen der gemessenen und der vorbestimmten Stickoxidemission oder beim Auftreten eines vorbestimmten charakteristischen Abweichmusters ist von einer Funktionsstörung oder Schädigung des Katalysators auszugehen, zu deren Behebung unabhängig von der aktuellen Schwefelbeladung des NOₓ-Speicherkatalysators eine vorzeitige De-Sulfatierung eingeleitet wird. Die erkannte Schädigung wird hierbei zusammen mit der aktuellen prognostizierten oder berechneten und der gemessenen Schwefelbeladung an eine zugeordnete OBD-Kontrolleinrichtung weitergeleitet. Die Toleranzschwelle für die Detektion einer Katalysatorschädigung ist hierbei unterhalb der OBD-relevanten Schädigungsgrenzen angesiedelt, damit "Reparaturmaßnahmen" für Katalysatordefekte, die beispielsweise auf einmaliges Tanken hochverschwefelter Kraftstoffe zurückgeführt werden können, noch mit Erfolg durchführbar sind.

Bei einer bevorzugten Verfahrensvariante müssen die erwähnten Abweichungen zumindest für eine bestimmte Zeitdauer auftreten, bevor eine vorgezogene De-Sulfatierung eingeleitet wird.

Das erfindungsgemäße Verfahren mit all seinen Verfahrensvarianten ermöglicht auf Grund der kontinuierlichen Überwachung der Katalysatoraktivität eine Optimierung des De-Sulfatierungszeitpunktes und eine Optimierung der erforderlichen Anzahl an De-Sulfatierungsvorgängen durch vorgezogene Einleitung einer De-Sulfatierung bei Erkennung eines schwefelbedingten Katalysatordefektes und durch Unterdrückung überflüssiger De-Sulfatierungen bei ordnungsgemäßer Funktionsweise trotz prognostizierter hoher Schwefelbelastung. Die Durchführung der erforderlichen De-Sulfatierungsvorgänge wird somit auch ohne Verfügbarkeit eines den Schwefelgehalt des jeweils verwendeten Kraftstoffs oder des entstehenden Abgases messenden Sensors automatisch an den aktuellerweise vorhandenen Schwefelgehalt angepaßt, so daß überflüssige Eingriffe in das Betriebsverhalten der Brennkraftmaschine und des NOₓ-Speicherkatalysators weitgehend unterbleiben.

Weitere Vorteile des erfindungsgemäßen Verfahrens ergeben sich nicht nur aus den zugehörigen Ansprüchen - für sich und/oder in Kombination - sondern auch aus der nachfolgenden Beschreibung eines bevorzugten Ausführungsbeispiels in Verbindung mit den zugehörigen Zeichnungen. In den Zeichnungen zeigen:

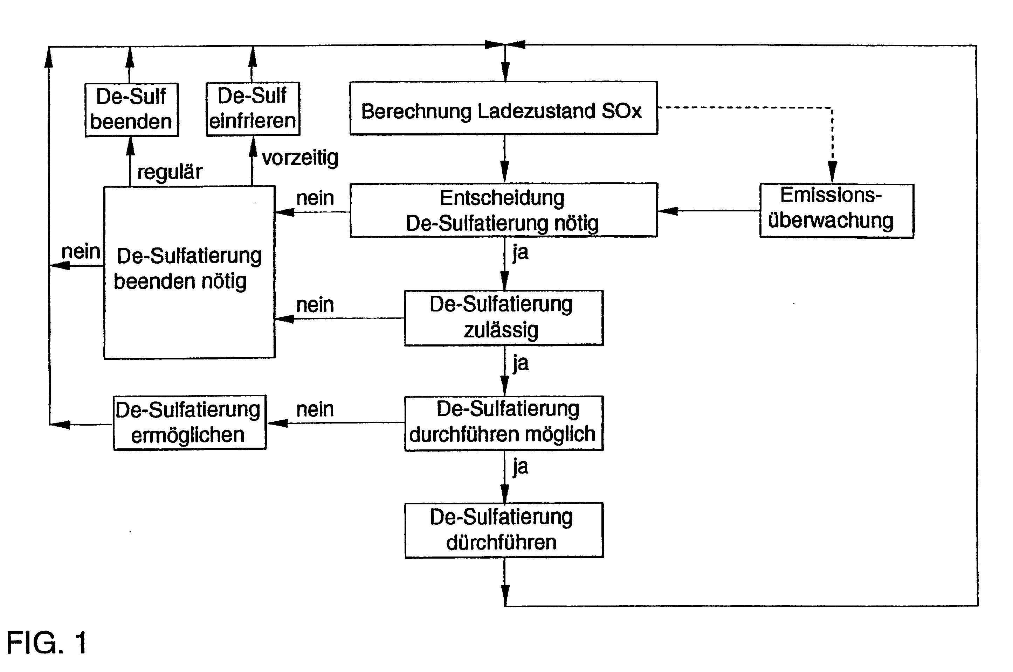

- Fig. 1: ein Flußdiagramm des erfindungsgemäßen Verfahrens;
- Fig. 2: anhand eines Flußdiagramms die Bestimmung der Temperatur und der Schadstoffumsetzung in einem Vorkatalysator; und
- Fig. 3: in schematischer Darstellung eine einem Motor nachgeschaltete Abgasreinigungsvorrichtung zur Durchführung des erfindungsgemäßen Verfahrens.

Ausgangspunkt für das erfindungsgemäße Verfahren ist die kontinuierliche Bestimmung des Beladungszustandes eines einer mager betriebenen Brennkraftmaschine, wie ein direkteinspritzender Ottomotor oder ein Dieselmotor, nachgeschalteten NOₓ-Speicherkatalysators mit Schwefel. Für Lambda-Werte größer oder gleich einem dem Beginn der Schwefeleinlagerung entsprechenden Lambda-Schwellenwert und Katalysatortemperaturen unterhalb der Entschwefelungstemperaturschwelle wird der Beladungszustand näherungsweise zunächst auf bekannte Art und Weise einfach über die sich aus dem kumulierten Kraftstoffverbrauch seit der letzten De-Sulfatierung ergebende Schwefel-Rohemission berechnet, da vereinfachend von einer sehr hohen Effizienz nahe 100 % bei der Schwefeleinlagerung und einem zu vernachlässigenden Abbau des eingelagerten Schwefels bei den intermittierend durchgeführten NOₓ-Regenerationen ausgegangen werden kann. Die so berechneten Näherungswerte werden dann zur Bestimmung der tatsächlich gespeicherten SOₓ-Masse erfindungsgemäß noch über Korrekturkennfelder oder Korrekturkennlinien für die Katalysatortemperatur, die Raumgeschwindigkeit/ den Abgasmassenstrom, die gespeicherte NOₓ-Masse, die gespeicherte SOₓ-Masse und den Lambda-Wert korrigiert, wobei sich Abweichungen von bis zu etwa 60 % von den über den kumulierten Kraftstoffverbrauch ermittelten Näherungswerten ergeben können. Da gegenwärtig noch kein Sensor zur direkten Bestimmung des Schwefelgehaltes im Kraftstoff bzw. Abgas verfügbar ist, wird zur Gewährleistung einer hinreichend häufigen De-Sulfatierung von einem gesetzlich maximal zulässigen Schwefelgehalt im Kraftstoff ausgegangen. Es sei jedoch bemerkt, daß auch andere Bestimmungsmöglichkeiten des Beladungszustandes denkbar sind.

Bei Lambda-Werten unterhalb des genannten Lambda-Schwellenwertes und bei ausreichend hohen Katalysatortemperaturen oberhalb der Entschwefelungs-Temperaturschwelle von mehr als etwa 300 °C bei DI-Dieselmotoren und von mehr als etwa 500 °C bei anderen Motoren erfolgt hingegen eine Schwefelentladung, die mit dem Reduktionsmittelangebot, dem Abgasmassenstrom, der Katalysatortemperatur, dem aktuellen Beladungszustand des Katalysators mit Schwefel, der Schwefel-Beladung des Katalysators zu Beginn der De-Sulfatierung und dem Lambda-Wert korreliert ist. Die Abhängigkeit von diesen Größen ist unterschiedlich stark ausgeprägt. Allein die Berücksichtigung der zu Beginn der Entschwefelung vorhandenen Schwefelmasse bewirkt jedoch bereits eine Abweichung von etwa ± 20 % im Vergleich zu einer herkömmlichen Berechnung der Regenerationsdauer ohne eine entsprechende Berücksichtigung des Anfangsbeladungszustandes. Bei Vorliegen der genannten Betriebsbedingungen wird daher aus den genannten Einflußgrößen die Abnahme der Schwefelbeladung berechnet.

Hierbei wird auch der Einfluß der O₂-Speicherfähigkeit berücksichtigt. Vor dem Einleiten bzw. Fortführen einer De-Sulfatierung muß erst der im NOₓ-Speicherkatalysator eingelagerte Restsauerstoff ganz oder teilweise verbraucht werden. Aus dem gemessenen Abgas-Lambdawert LAMSONI wird der zum O₂-Verbrauch bei LAMSONI ≤ LAMO2LAD nutzbare Reduktionsmittelüberschuß errechnet, wobei LAMO2LAD der Lambda-Wert ist, bei dessen Überschreiten eine Sauerstoff-Einlagerung erfolgt. Erst bei verschwindendem Restsauerstoffgehalt im NOₓ-Speicherkatalysator werden die gespeicherten Sulfate umgesetzt, wobei die Schwefelumsetzung auch überlappend mit dem Sauerstoffverbrauch einsetzen kann.

Bei Vorliegen von LAMSONI > LAMO2LAD nach vorherigem Fettbetrieb wird die im NOₓ-Speicherkatalysator lagernde Restsauerstoffmasse mit von LAMSONI abhängiger Geschwindigkeit wieder auf den temperaturabhängigen Maximalwert gesetzt, auf dem die eingelagerte Sauerstoffmasse während des Magerbetriebs verbleibt.

Die ermittelte Schwefelbeladung des NOₓ-Speicherkatalysators wird mit einem vorbestimmten ersten Schwefelbeladungsschwellenwert verglichen, bei dessen Überschreitung eine De-Sulfatierung als erforderlich erachtet wird, um keine unzulässigen Einbrüche bei der NOₓ-Konvertierung zu erhalten und um die mit der eingelagerten Schwefelmasse ansteigende Sulfatkorngröße zu begrenzen.

Eine De-Sulfatierung wird jedoch auch bereits ohne Überschreitung des ersten Schwefelbeladungsschwellenwertes vorzeitig als erforderlich erachtet, wenn seitens der nachstehend noch ausführlich beschriebenen erfindungsgemäßen Emissionsüberwachung eine schwefelbedingte noch "reparierbare" Schädigung erkannt wird. Andererseits wiederum wird mittels der Emissionsüberwachung eine wegen Überschreitung dieses ersten Schwefelbeladungsschwellenwertes an sich erforderliche De-Sulfatierung bis zum Erreichen eines maximal zulässigen vorbestimmten Stickoxidemissionsdurchbruchs hinausgezögert, wenn die gemessenen Einbrüche bei der NOₓ-Konvertierung deutlich unter dem für diese Verschwefelung prognostizierten Niveau liegen. In diesem Fall ist von einem Fahrzeugbetrieb mit schwefelarmem Kraftstoff auszugehen, so daß unnötige den Katalysator thermisch belastende Entschwefelungsvorgänge unterdrückt werden können.

Unabhängig von dem ermittelten Beladungswert ist eine Entschwefelung auch dann erforderlich, wenn seitens einer zugeordneten OBD-Einrichtung (OBD = ON-BOARD-DIAGNOSE) eine solche Maßnahme angefordert wird.

Vor der Einleitung und Durchführung einer De-Sulfatierung oder vor der Fortsetzung eines aus den nachstehend beschriebenen Gründen unterbrochenen De-Sulfatierungsvorgangs wird jedoch in einem weiteren Verfahrensschritt zunächst stets die Zulässigkeit einer solchen Maßnahme überprüft, um unerwünschte oder gar gefährliche Fahrsituationen oder Betriebszustände zuverlässig ausschließen zu können. Diese Zulässigkeitsüberprüfung erfolgt kontinuierlich und zeitlich parallel zu der bereits beschriebenen Bestimmung des Beladungszustandes. Es ist jedoch auch ausreichend, wenn eine entsprechende Überprüfung erst dann erfolgt, wenn eine De-Sulfatierung aus den genannten Gründen als erforderlich erachtet wird.

Da die zur Durchführung einer De-Sulfatierung erforderliche Anfettung des Abgasstroms auf λ ≤ 1 zu einer Erhöhung der gesamten eingespritzten Kraftstoffmenge und damit zu einer Leistungszunahme führen kann, werden hierbei zunächst alle der Brennkraftmaschine zugeordneten sicherheitsrelevanten Bauteile, d.h. insbesondere alle Einspritz-, Ansaug- und Abgaskomponenten, auf einwandfreie Funktionsweise überprüft und eine De-Sulfatierung oder Regeneration des Katalysators nur zugelassen, wenn von diesen Bauteilen keine Fehlermeldungen kommen. Eine entsprechend Überwachung der Bauteile erfolgt vorzugsweise mittels der bereits erwähnten OBD-Einrichtung.

Zudem wird auch die aktuelle Fahrsituation auf die Einhaltung vorbestimmter Fahrparameter überprüft, da eine De-Sulfatierung nicht bei allen Fahr- und Betriebssituationen zulässig ist. Zur Durchführung einer De-Sulfatierung müssen insbesondere die Drehzahl, die Last, die Laständerung und die Fahrgeschwindigkeit innerhalb vorgegebener Zulässigkeitsgrenzen liegen, die eingehalten werden müssen, damit eine De-Sulfatierung erfolgen kann oder eine bereits begonnene De-Sulfatierung nicht unterbrochen oder abgebrochen wird.

Bei sehr hohen Drehzahlen und Lasten ist eine Anfettung des insbesondere bei Turbomotoren sehr hohen Abgasmassenstroms auf einen Lambda-Wert von weniger als 1, wie er zur Durchführung einer De-Sulfatierung erforderlich ist, nur in Verbindung mit hoher Exothermie im Abgas möglich, so daß eine De-Sulfatierung bei Überschreitung einer maximal zulässigen Motordrehzahl bzw. Last als unzulässig erachtet wird. Diese obere Zulässigkeitsgrenze für die Motordrehzahl entspricht hierbei einer Drehzahl, die die Leerlaufdrehzahl um etwa 85 % der Differenz zwischen Leerlauf- und Nennleistungsdrehzahl übertrifft. Die Zulässigkeitsgrenze kann jedoch auch der maximal möglichen Drehzahl des Motors entsprechen, die gleich der mechanischen Grenzdrehzahl oder der von einem Motorsteuergerät vorgegebenen maximal zulässigen Drehzahl des Motors ist. Die entsprechend Zulässigkeitsgrenze für die Last entspricht etwa 90 - 100 % des maximalen Drehmomentes des verwendeten Motors.

Da eine De-Sulfatierung bei sehr niedrigen Motordrehzahlen und Lasten die verstärkte Bildung und Konzentration unerwünschter Nebenprodukte begünstigen kann, wird eine entsprechend Maßnahme auch bei Unterschreitung unterer Zulässigkeitsgrenzen für die Drehzahl bzw. Last unterdrückt oder gar nicht erst eingeleitet. Als Mindestdrehzahl für die Durchführung einer De-Sulfatierung wird hierbei eine Drehzahl verwendet, welche die Leerlaufdrehzahl um etwa 5 - 10 % der Differenz zwischen der Leerlauf- und der Nennleistungsdrehzahl übertrifft, während die Mindest-Last etwa der maximalen Schlepplast oder der Nullast des Motors entspricht.

Zur Vermeidung gefährlicher Fahrsituationen wird auch bei abrupten Laständerungswünschen oberhalb eines vorbestimmten Laständerungsschwellenwertes keine De-Sulfatierung zugelassen, der typischerweise etwa 50 - 150 % der Differenz zwischen dem minimal und maximal möglichen Motordrehmoment pro Sekunde beträgt. Als Maß für die Laständerungswünsche dient hierbei eine zeitliche Veränderung des Pedalwertgebers PWG oder die PWG-Geschwindigkeit, die beispielsweise etwa 100 % der Differenz zwischen minimal und maximal möglichem Pedalgeberwert pro Sekunde nicht überschreiten darf.

Die Zulässigkeit einer De-Sulfatierung bei einer vorgegebenen Fahrsituation kann auch aus Schwellenwerten für die Einspritzmenge, den Drehzahlgradienten oder für ein Schuberkennungs- oder Bremssignal abgeleitet werden, wobei beispielsweise die Einspritzmenge in Abhängigkeit vom verwendeten Motortyp etwa 10 - 90 % des Maximalwertes betragen sollte. Falls eine oder mehrere dieser Möglichkeiten nicht benötigt werden, so können diese durch entsprechende Wahl der Schwellenwerte oder Zulässigkeitsgrenzen oder durch soft- oder hardwaremäßige Schalter außer Betrieb genommen werden.

Um akustische Einflüsse einer De-Sulfatierung durch die erforderliche Teilandrosselung in Fahrphasen mit höheren Abroll- und Windgeräuschen, d.h. höheren Geschwindigkeiten, zu verlagern und um eventuell auftretende geruchsintensive Reaktionsprodukte nicht im Stillstand oder bei einer zu geringen Fahrgeschwindigkeit zu emittieren, ist zudem die zulässige Mindestgeschwindigkeit zur Durchführung einer De-Sulfatierung auf etwa 20 - 50 km/h begrenzt. Als weitere Zulässigkeitsvoraussetzung zur Durchführung einer De-Sulfatierung wird daher die Einhaltung dieser Mindestgeschwindigkeit überwacht.

Der NOₓ-Speicherkatalysator benötigt nach einer vollständig verlaufenen oder aus den nachstehend noch dargestellten Gründen unterbrochenen oder vorzeitig abgebrochenen De-Sulfatierung stets eine Abkühl- oder Erholungsphase bis zu einer erneuten De-Sulfatierung, deren Dauer im wesentlichen abhängig ist von der zum Erreichen des De-Sulfatierungszustandes erforderlichen Vorbereitungszeit, der eigentlichen De-Sulfatierungsdauer und dem jeweiligen Temperaturverlauf. Nach ordnungsgemäßer Beendigung eines De-Sulfatierungsvorgangs beträgt die minimale Erholungszeit typischerweise etwa 30 - 180 Minuten, während nach einem vorzeitigen Abbruch bzw. einer Unterbrechung lediglich eine Zeitspanne von etwa 2 - 5 Minuten erforderlich ist. Nach Beendigung bzw. Abbruch einer De-Sulfatierung wird daher durch ein entsprechendes Abbruch- oder Endsignal eine Zeitfunktion gestartet und in Abhängigkeit von den genannten Einflußgrößen die aktuellerweise jeweils erforderliche minimale Erholungsdauer bestimmt, innerhalb der eine erneute De-Sulfatierung als unzulässig erachtet wird. Die Einhaltung dieser Zulässigkeitsvoraussetzung wird dann durch einen einfachen Vergleich der so ermittelten minimal erforderlichen Erholungsdauer mit den gemessenen Zeitfunktionswerten überprüft.

Eine andere Möglichkeit für die Unzulässigkeit eines De-Sulfatierungsvorgangs besteht in einer zu hohen thermischen Belastung des NOₓ-Speicherkatalysators durch Überschreitung eines Schwellenwertes für die De-Sulfatierungs-Gesamtzeit, die sich aus der für den Übergang vom normalen Betriebszustand in den De-Sulfatierungszustand erforderlichen Vorbereitungs- oder Aufheizzeit und der zur Durchführung einer De-Sulfatierung erforderlichen eigentlichen De-Sulfatierungszeit zusammensetzt. Der genannte Schwellenwert beträgt üblicherweise etwa 3 - 20 Minuten.

Die Dauer eines De-Sulfatierungsvorgangs wird daher kontinuierlich bestimmt und mit dem angegebenen Schwellenwert verglichen. Bei Überschreitung dieses Schwellenwertes wird eine Fortsetzung des De-Sulfatierungsvorgangs als unzulässig erachtet, so daß er auf die nachstehend noch ausführlicher beschriebene Art und Weise automatisch unterbrochen oder gegebenenfalls auch abgebrochen wird.

Alternativ hierzu können auch Schwellenwerte für die Einzelzeiten verwendet werden. In diesem Fall beträgt die maximal zulässige Aufheiz- oder Vorbereitungszeit und die maximal zulässige De-Sulfatierungsdauer jeweils etwa 100 - 600 s. Zur Schonung des Katalysators sind jeweils die Werte nahe der angegebenen unteren Grenzen zu bevorzugen.

Im Falle einer nachstehend noch ausführlich beschriebenen vorgezogenen De-Sulfatierung auf Grund einer durch die erfindungsgemäße Emissionsüberwachung des ausströmenden Abgases festgestellten Unregelmäßigkeit der Katalysatoraktivität wird zur Gewährleistung einer ordnungsgemäßen Funktionsweise des NOₓ-Speicherkatalysators die Anzahl der anschließend durchgeführten regulären De-Sulfatierungen bestimmt und mit einer vorbestimmten Mindestanzahl aufeinanderfolgender De-Sulfatierungen verglichen, die etwa 10 - 30 beträgt. Beim Auftreten einer erneuten Unregelmäßigkeit der Katalysatoraktivität vor Erreichung dieser Mindestanzahl werden weitere De-Sulfatierungen als unzulässig erachtet., um eine zu häufige Einleitung vorgezogener De-Sulfatierungen bei vorgeschädigtem NOₓ-Speicherkatalysator zu verhindern. Es wird von einem Katalysatordefekt ausgegangen, der an die zugeordnete OBD-Einrichtung übermittelt wird und durch eine entsprechende Anzeigeeinrichtung angezeigt werden kann.

Neben der Zulässigkeit einer De-Sulfatierung wird in einem weiteren Verfahrensschritt auch geprüft, ob durch Einhaltung vorbestimmter De-Sulfatierungsparameter, die insbesondere bestimmte Bereiche der Katalysatortemperatur und des Lambda-Wertes umfassen, überhaupt die Möglichkeit zur Durchführung einer De-Sulfatierung gegeben ist. Diese Überprüfung erfolgt gleichzeitig mit der oben beschriebenen Zulässigkeitsüberprüfung. Es ist jedoch auch denkbar, daß sie erst bei Überschreitung des vorbestimmten ersten Schwefelbeladungsschwellenwertes und bei Zulässigkeit einer De-Sulfatierung durchgeführt wird.

Zur Gewährleistung einer erfolgreichen De-Sulfatierung muß insbesondere eine minimale Katalysatortemperatur vorliegen, die bei NOₓ-Speicherkatalysatoren auf Bariumbasis etwa 450 °C beträgt, während sie für NOₓ-Speicherkatalysatoren auf Kaliumbasis bei etwa 600 °C liegt. Die maximal zulässigen Katalysatortemperaturen betragen etwa 700 - 850 °C. Die Einhaltung dieser Grenzen wird über die gemessenen oder berechneten Abgastemperaturen vor und nach dem NOₓ-Speicherkatalysator überwacht, wobei gegebenenfalls auch bereits einer dieser Werte ausreicht.

Zur erfolgreichen Durchführung einer De-Sulfatierung muß ein mittlerer Lambda-Wert von etwa 1,03 unterschritten werden.

In Abhängigkeit vom Edelmetallgehalt und der Edelmetallzusammensetzung, von der Art und der Menge der Speicherkomponenten, von der Dispersion der Edelmetall- und Speicherkomponenten, von der Art der Aufbringung auf den Washcoat, von der Dichte, Menge, Porengrößenverteilung, Zusammensetzung und Basizität des Washcoats sowie vom Material und der Ausführung des Trägermaterials, können jedoch auch andere Randbedingungen für die Katalysatortemperatur und den Lambda-Wert verwendet werden.

Bei Überschreitung des ersten Schwefelbeladungsschwellenwertes und Zulässigkeit einer De-Sulfatierung werden nun gegebenenfalls durch verschiedene motorische Maßnahmen der nachstehen genannten Art die erforderlichen De-Sulfatierungsparameter eingestellt, falls diese noch nicht vorliegen sollten, und es wird die erforderliche De-Sulfatierung eingeleitet. Bei Unzulässigkeit einer solchen Maßnahme wird hingegen zunächst bis zum Vorliegen der Zulässigkeitsvoraussetzungen gewartet und gegebenenfalls eine festgestellte Funktionsstörung eines der bereits genannten sicherheitsrelevanten Bauteile signalisiert.

Um das Betriebsverhalten der Brennkraftmaschine und des NOₓ-Speicherkatalysators Verfahren möglichst wenig zu beeinflussen, kann die Einstellung der erforderlichen De-Sulfatierungsparameter auch erst nach Ablauf einer vorbestimmten Zeitspanne oder nach Überschreitung eines zweiten Schwellenwertes für die Schwefelbeladung erfolgen, der beispielsweise einer Beladung entspricht, bei der eine De-Sulfatierung oder Regeneration dringend erforderlich ist. In diesem Fall wird der Beladungszustand des NOₓ-Speicherkatalysators durch die Schwellenwerte in drei charakteristische Bereiche unterteilt, in denen eine "De-Sulfatierung nicht nötig", eine "De-Sulfatierung nötig" oder eine "De-Sulfatierung dringend nötig" ist. Es ist auch eine Kombination beider Verfahren oder auch eine feinere Unterteilung des Beladungszustandes durch Verwendung weiterer Schwellenwerte denkbar.

Im Zustand "De-Sulfatierung nötig" findet dann eine De-Sulfatierung des NOx-Speicherkatalysators nur statt, wenn sowohl die Betriebssituation eine De-Sulfatierung erlaubt, d.h., wenn die angegebenen Zulässigkeitsvoraussetzungen erfüllt sind, als auch die erforderlichen Betriebsparameter bereits eingestellt sind und eine De-Sulfatierung ermöglichen. Andernfalls wird mit einer De-Sulfatierung so lange gewartet, bis der Zustand "De-Sulfatierung dringend nötig" erreicht ist. Dann wird jedoch beim Vorliegen der Zulässigkeitsvoraussetzungen durch verschiedene motorische Maßnahmen der nachstehend genannten Art, die einzeln oder in Kombination erfolgen, auf die Betriebsparameter derart Einfluß genommen, daß eine De-Sulfatierung durchgeführt werden kann. Durch diese zweistufige Vorgehensweise wird das Betriebsverhalten der Brennkraftmaschine so wenig wie möglich beeinflußt.

Die Einstellung der erforderlichen De-Sulfatierungsparameter umfaßt hierbei die folgenden Maßnahmen, die einzeln oder in Abhängigkeit vom Betriebspunkt sowie der Abgas- und Katalysatortemperatur auch in Kombination ergriffen werden können.
1. Homogener Betrieb mit Lambda ≈ 1 im gesamten Kennfeld.
2. Spätzündung bei homogenem Betrieb.
3. Anhebung der Leerlaufdrehzahl bei einem Betrieb mit Lambda ≈ 1.
4. Anhebung der Lambda-Regelamplitude und der Lambda-Regelfrequenz bei einem Betrieb mit Lambda ≈ 1.
5. Zylinderselektiver Mager-Fett-Betrieb bei einem Betrieb mit Lambda ≈ 1.
6. Nacheinspritzung während oder nach Brennende:
   a. bei geschichtet magerem Grundbetrieb auf Lambda ≈ 1;
   b. bei homogen magerem Grundbetrieb auf Lambda ≈ 1;
   c. bei homogenem Betrieb mit Lambda ≈ 1 auf Lambda < 1.
7. Sekundärlufteinblasung bei Lambda << 1 bei Vorhandensein einer Sekundärluftpumpe (SLP).

Das Ziel dieser Maßnahmen besteht darin, neben der thermischen Aufheizung durch heißeres Abgas zusätzliche Schadstoffmengen bei hinreichenden O₂-Konzentrationen bereitzustellen, so daß auf dem NOₓ-Speicherkatalysator und einem diesem vorgeschalteten Vorkatalysator weitere Temperatursteigerungen durch die Schadstoffumsetzungen möglich sind. Dabei soll nach Möglichkeit nur ein Teil der Schadstoffe auf dem Vorkatalysator umgesetzt werden, damit im Vorrohr bei vergleichsweise kühlem Abgas eine weniger starke Auskühlung erfolgt. Zudem wird die hohe Temperatur ohnehin erst am NOₓ-Speicherkatalysator benötigt. Zusätzlich sollte die Schadstoffzusammensetzung hinsichtlich des HC/CO-Verhältnisses und das Verhältnis zwischen Schadstoff- und O₂-Konzentration weitgehend frei wählbar sein.

Lambda-Werte >> 1 sind während der Ermöglichung der De-Sulfatierung bei gemessenen Abgastemperaturen von mehr als etwa 550 °C nicht empfehlenswert, da im Zuge der Katalysatoraufheizung die NOₓ-Thermo-Desorptionstemperatur überschritten wird. Gegebenenfalls kann zur Minderung der Nebenproduktbildung ein temporärer leicht magerer Betrieb mit Lambda ≤ 1,05 mit hohen Schadstoff- und Sauerstoffkonzentrationen sinnvoll sein.

Während der Ermöglichung der De-Sulfatierung wird der Lambda-Sollwert durch Einstellung geeigneter De-Sulfatierungsparameter ausgehend von einem Lambda-Grundwert in Abhängigkeit von der Abgastemperatur, der Leerlaufdrehzahl, der Einspritzmenge, dem Einspritzzeitpunkt der Homogen-, Schicht- und Nacheinspritzung, der Wobblefrequenz und der Wobbleamplitude des Lambdasignals, dem Maß der Zylinderverstimmung, der über eine Sekundärluftpumpe (SLP) zusätzlich eingebrachten Luftmasse und der Zeit seit Überschreitung der Katalysatortemperatur, bei der die De-Sulfatierung einsetzt, über Kennlinien oder Kennfelder korrigiert.

Der NOₓ-Speicherkatalysator wird hierbei zum schnellen Aufheizen auf die Soll-Desulfatierungstemperatur so lange mit einer höheren Vorlauftemperatur von maximal etwa 800 - 980 °C erwärmt, bis die mittlere Temperatur des NOₓ-Speicherkatalysators der gewünschten De-Sulfatierungstemperatur entspricht. Als maximale Vorlauftemperatur wird hierbei insbesondere diejenige Temperatur gewählt, bei der nach einer einstündigen Ofenalterung des NOₓ-Speicherkatalysators mit dieser Temperatur unter hydrothermaler Umgebung, d.h. Luft mit 0,1 - 15 % Sauerstoff und 0,1 - 15 % Wasserdampf, maximal etwa 10 % NOₓ-Konvertierungseinbruch im Emissionszulassungstest für den für das Fahrzeug vorgesehenen Verkaufsmarkt auftritt. Die maximal zulässige Vorlauftemperatur läßt sich dadurch berechnen, daß von einem bestimmten Ausgangs- oder Rohwert die Temperaturerhöhung durch die Rest-Schadstoffkonvertierung auf dem NOₓ-Speicherkatalysator subtrahiert wird. Die Rest-Schadstoffkonvertierung wiederum kann kennfeldmäßig aus dem Schadstoffdurchbruch durch den Vorkatalysator und dem Abgasmassenstrom berechnet werden.

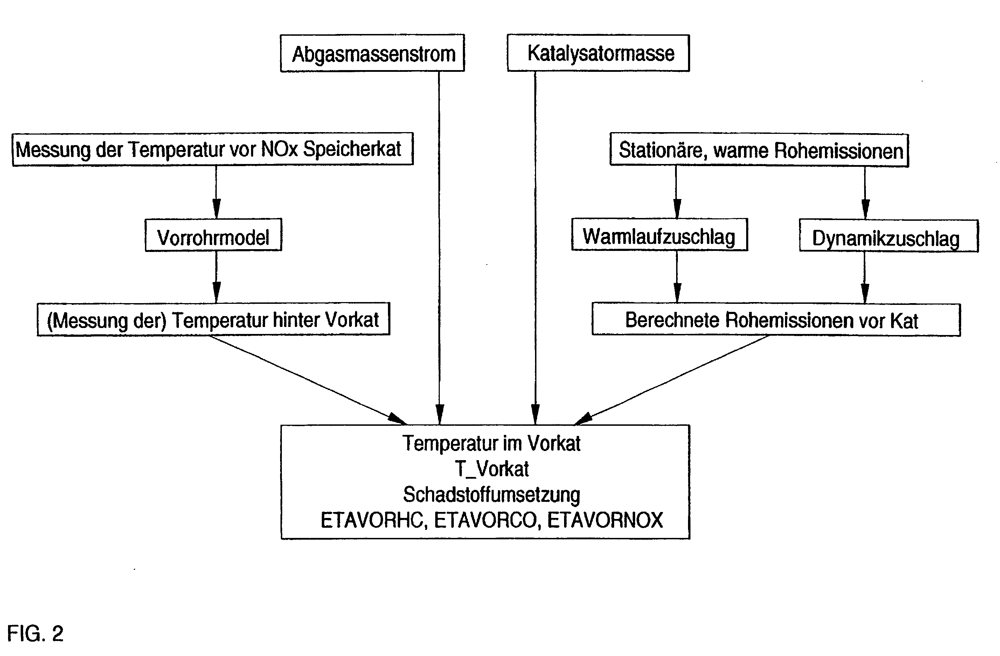

Die Vorlauftemperatur des NOₓ-Speicherkatalysators und die Temperatur des Vorkatalysators werden zudem auf der Basis der von einem Abgastemperatursensor zwischen dem NOₓ-Speicherkatalysator und dem Vorkatalysator ermittelten Temperatur überwacht und so geregelt, daß zur Schonung des temperaturempfindlichen NOₓ-Speicherkatalysators die maximal zulässige Vorlauftemperatur und eine bestimmte maximal zulässige Vorkatalysatortemperatur nicht überschritten wird. Die gemessene Vorlauftemperatur wird hierbei um die Lauflänge, die geometrische Ausführung und die Umströmung des Vorrohres korrigiert, während die eigentliche Temperatur des Vorkatalysators unter Berücksichtigung der Katalysatormasse kennfeldmäßig aus der gemessenen Abgastemperatur und dem Abgasmassenstrom bestimmt wird. Hierbei wird auch die berechnete Schadstoffumsetzung auf dem Vorkatalysator berücksichtigt. (siehe Fig. 2).

Die tatsächlichen Rohemissionen an HC, CO, NOₓ, H₂ und O₂ vor dem Vorkatalysator werden durch multiplikative Zuschläge für die Kühlmitteltemperatur und die Drehzahl-Last-Dynamik aus einem im stationären Wärmetest ermittelten Rohemissionskennfeld bestimmt. Ab einer für die De-Sulfatierung relevanten Temperatur von mehr als etwa 300 °C bei DI-Dieselmotoren und von mehr als etwa 500 °C bei anderen magerbetriebenen Motoren wird hierbei von einer idealen Umsetzung der Schadstoffe ausgegangen, wobei Abschläge von diesem Wert durch die Raumgeschwindigkeit berücksichtigt werden Bei λ ≤ 1 betrifft dies die Umsetzung der Schadstoffe HC, CO und NOₓ, bei λ > 1 nur die Umsetzung von HC und CO. Damit läßt sich auch aus der hinter dem Vorkatalysator gemessenen Temperatur näherungsweise die Temperatur im Vorkatalysator bestimmen, Überdies läßt sich auch der Schadstoffdurchbruch durch den Vorkatalysator näherungsweise berechnen. Die Bestimmung der Vorkatalysatortemperatur und der Schadstoffumsetzung im Vorkatalysator sind in Fig. 2 schematisch dargestellt, wobei die CO-, HC- und NOₓ-Konvertierungsrate im Vorkatalysator mit ETAVORCO, ETAVORHC bzw. ETAVORNOX bezeichnet ist.

Das Ergreifen der Maßnahme "Spätzündung bei homogenem Betrieb" (Maßnahme 2) wird erst oberhalb einer bestimmten Kühlmitteltemperatur eingeleitet, die über die Ansauglufttemperatur korrigiert wird. Die Zündwinkelvorgabe im Homogenbetrieb richtet sich nach dem spätesten möglichen Zündwinkel und wird in Abhängigkeit von der Katalysator- und Abgastemperatur, der Leerlaufdrehzahl und der Lambdavorgabe über Kennfelder oder Kennlinien korrigiert. Zusätzlich erfolgt eine Korrektur bei Annäherung an die maximal zulässige Temperatur des Vorkatalysators bzw. NOₓ-Speicherkatalysators. Im Schichtbetrieb wird ansonsten, sofern während der Ermöglichung der De-Sulfatierung überhaupt erwünscht, ohne Ergreifen weiterer Maßnahmen in die Zündung nicht eingegriffen.

Zur Änderung der Lambda-Regelstrategie werden die Vorgaben hinsichtlich der Regelfrequenz, der Regelamplitude und der Regelform in bestimmten Bereichen frei wählbar gestaltet. Die Lambda-Regelfrequenz, die Lambda-Regelamplitude und die Steilheit der Flanken beim Ausmagern bzw. Anfetten werden in Abhängigkeit von der Temperatur des Vorkatalysators und des NOx-Speicherkatalysators geändert, wobei die Änderung der Regelfrequenz - 50 bis + 250 % und die Änderung der Regelamplitude - 20 bis + 400 % beträgt, während die Unterschiede der Steilheit der Flanken beim Ausmagern bzw. Anfetten 10 : 1 bis 1 : 10 betragen.

Zur Realisierung des zylinderselektiven Mager-Fett-Betriebs bei Lambda ≈ 1 (Maßnahme 5) wird ein Ungleichförmigkeitsfaktor der Einspritzmenge definiert, der das maximal zulässige Maß der Verstimmung zwischen den Zylindern angibt und kennfeldmäßig über die Last und die Drehzahl ermittelt und über die Temperatur der Brennkraftmaschine und die Abgastemperatur korrigiert wird, wobei bei Annäherung an die maximal zulässigen Temperaturen des Vorkatalysators und des NOₓ-Speicherkatalysators eine zusätzliche Korrektur erfolgt. Die Zündwinkel für die einzelnen Zylinder werden hierbei jeweils so angepaßt, daß von allen Zylinder das gleiche Moment abgegeben wird.

Die Soll-Einspritzmenge wird bei einem Motor mit n Zylindern für m Zylinder mit dem Ungleichförmigkeitsfaktor UF und für die restlichen n - m Zylinder mit
UF' = (n - m • UF)/(n - m) multipliziert, wobei n Werte ≥ 2 und m Werte zwischen 1 und n - 1 annehmen kann. Die angegebenen Multiplikationen mit UF bzw. UF' erfolgen hierbei vorzugsweise für 2 in der Zündfolge benachbarte Zylinder, wobei insbesondere zunächst für mindestens 2 in der Zündfolge benachbarte Zylinder die Multiplikation mit UF erfolgt und anschließend die Multiplikation mit UF' für zumindest 2 in der Zündfolge benachbarte Zylinder.

Alternativ hierzu wird die Soll-Einspritzmenge bei einem Motor mit n Zylindern für m Zylinder mit einem ersten Ungleichförmigkeitsfaktor UF1 und für p Zylinder mit einem zweiten Ungleichförmigkeitsfaktor UF2 und für die restlichen n - m - p Zylinder mit (n - m • UF1 - p • UF2)/(n - m - p) multipliziert, wobei n Werte ≥ 3, m Werte zwischen 1 und n- 2 und p Werte zwischen 1 und n- 2 annehmen kann. Der Ungleichförmigkeitsfaktor UF2 ist hierbei vorzugsweise größer als der Ungleichförmigkeitsfaktor UF1, wobei insbesondere gilt UF2 > 1,1 • UF1 und vorzugsweise UF2 > 1,5 · UF1. UF2 ist somit insbesondere zumindest 10 %, vorzugsweise jedoch zumindest 50 %, größer als UF1.

Die Abweichung zwischen den Ungleichförmigkeitsfaktoren UF1 und UF2 wird kennfeldmäßig über die Temperatur des NOx-Speicherkatalysators, die aktuelle Schwefelbeladung und die Schwefelbeladung zu Beginn des De-Sulfatierungsvorgangs korrigiert.

Bei der Zylindervertrimmung wird eine Maximalvertrimmung von ± (20 - 50 %) definiert, die über die Temperatur der verwendeten Brennkraftmaschine, die Temperatur des Vorkatalysators und die Temperatur des NOₓ-Speicherkatalysators korrigiert wird. Dieser statische Wert kann um ± 95 % von der Abweichung korrigiert werden.

Bei der Nacheinspritzung nach Brennende wird die Nach-Einspritzmenge über die Differenz zwischen dem berechneten Brennraum-Lambda-Wert und einer Brennraum-Lambda-Vorgabe errechnet. Die Überwachung und die Korrektur der errechneten Nach-Einspritzmenge erfolgt über den gemessenen Lambda-Wert des Abgases, wobei der Einspritzzeitpunkt zündzeitpunkt-, mengen-, last- und drehzahlabhängig so geregelt wird, daß die zusätzlich eingebrachte Kraftstoffmenge sicher nicht mehr verbrennt, aber ein vollständiges Austragen im Ausschubtakt möglich ist. Falls zur Zumessung der Homogen- bzw. Schicht-Einspritzmenge eine Rückmeldung der Lambdasondensignale erforderlich ist, muß während der Ermöglichung der De-Sulfatierung statt dessen ein gerechnetes Lambda-Signal bezogen auf den Verbrennungsvorgang ohne Nacheinspritzung, weitergeleitet werden.

Bei der Nacheinspritzung während des Brennendes erfolgt zusätzlich noch eine kennfeldmäßige Korrektur der Einspritzmenge der Haupteinspritzung zur Kompensation eventueller Drehmomentenänderungen durch im Brennraum verbleibende Nacheinspritz-Kraftstoffmengen bis zu etwa maximal 20 % der Nacheinspritzmenge. Dazu wird in Abhängigkeit vom Einspritzzeitpunkt, der Einspritzdauer, vom Zündzeitpunkt und der Drehzahl die noch verbrannte Nacheinspritz-Kraftstoffmenge und der Wirkungsgrad diese Verbrennungsanteils ermittelt und die Haupteinspritzmenge entsprechend reduziert.

Denkbar ist außerdem, die Verbrennung der nach-eingespritzten Kraftstoffmenge über eine erneute Zündung anzuregen.

Die Nacheinspritzung während oder nach Brennende bei homogenem Betrieb mit Lambda ≈ 1 auf Lambda < 1 kann durch die Einblasung von Sekundärluft unterstützt werden. Dabei wird besonders sorgfältig auf den Temperaturverlauf eines Vorkatalysators und des NOₓ-Speicherkatalysators geachtet, wobei neben der errechneten Temperatur auch der Temperaturgradient bei Annäherung an die jeweils zulässige Maximaltemperatur maßnahmenbegrenzend wirken.

Ein gemäß dem eben besprochenen Verfahrensschritt eingeleiteter De-Sulfatierungsvorgang wird bis zum Erreichen eines vorbestimmten ersten De-Sulfatierungsgrades durchgeführt, der einem im wesentlichen vollständig regenerierten NOₓ-Speicherkatalysator entspricht.

Zur Unterdrückung der Bildung unerwünschter Nebenprodukte wird die Lambdavorgabe beim Durchführen einer De-Sulfatierung spätestens bei Überschreitung der Katalysatortemperatur zeitlich variiert, bei der ein Abbau des eingelagerten Schwefels einsetzt. Hierbei wird zunächst ein von der Temperatur des NOₓ-Speicherkatalysators abhängiger Lambda-Grundwert festgelegt, der über die aktuelle Schwefelbeladung und die Schwefelbeladung zu Beginn des Ermöglichens der De-Sulfatierung zu einer Lambdavorgabe für die Durchführung der De-Sulfatierung korrigiert wird. Diese quasistatische nur langsam veränderliche Lambdavorgabe kann mit einer in Frequenz, Amplitude und Regelform veränderbaren Schwingung überlagert werden, die abhängig ist von der Lambdavorgabe selbst, der aktuellen Schwefelbeladung, der Schwefelbeladung zu Beginn des Ermöglichens der De-Sulfatierung, der Katalysatortemperatur sowie der Abweichung zwischen gemessener und berechneter Katalysatoraktivität. Die Steilheit der Ausmagerungs- zur Anfettungsflanke beträgt 10 : 1 bis 1 : 10.

Während des De-Sulfatierungsvorgangs wird die Temperatur des NOx-Speicherkatalysators überwacht. Bei Überschreitung eines während der De-Sulfatierung zumindest einzuhaltenden Schwellenwertes der Katalysatortemperatur werden die Maßnahmen zur Erhöhung der Katalysatortemperatur so weit zurückgenommen, daß die für die De-Sulfatierung vorgegebene Soll-De-Sulfatierungstemperatur innerhalb vorbestimmter Grenzen gehalten wird, die etwa ± 50 °C bis ± 150 °C betragen. Die Soll-De-Sulfatierungstemperatur wird hierbei aus der aktuellen Schwefelbeladung des NOₓ-Speicherkatalysators und der Schwefelbeladung zu Beginn des De-Sulfatierungsvorgangs berechnet und entsprechend der ermittelten Abweichung zwischen gemessener und berechneter oder prognostizierter Katalysatoraktivität bzw. Schwefelschädigung korrigiert.

Mit Ausnahme der Kalibrierung auf die geänderten Lambda- und Temperaturwerte entsprechen die Maßnahmen bei der Durchführung der De-Sulfatierung den Maßnahmen bei der Ermöglichung der De-Sulfatierung.

Nach regulärer Beendigung der De-Sulfatierung und erfolgter Regeneration des Katalysators werden die normalen Betriebsbedingungen wieder eingestellt und es erfolgt eine Wiederholung des oben beschriebenen Verfahrens durch Rückkehr zu dem erstgenannten Verfahrensschritt mit der kontinuierlichen Bestimmung und Überwachung des Schwefel-Beladungszustandes. Ein Umschalten in den geschichtet-mageren Betrieb ist jedoch erst nach Auskühlung des NOₓ-Speicherkatalysators unter die NOₓ-Thermo-Desorptionsschwelle möglich. Gegebenenfalls kann im Leerlauf und im untersten Lastbereich bei den dort sehr niedrigen NOₓ-Rohemissionen dennoch ein geschichtetmagerer Betrieb zugelassen werden, um die Auskühlung des NOₓ-Speicherkatalysators in seinen normalen Betriebsbereich zu beschleunigen.

Falls die aktuellen Ergebnisse der Zulässigkeitsüberprüfung dies jedoch erfordern, wird die eingeleitete De-Sulfatierung nicht bis zum Erreichen des vorbestimmten ersten De-Sulfatierungsgrades durchgeführt sondern es erfolgt statt dessen bei erkannter Unzulässigkeit des De-Sulfatierungsvorgangs ein vorzeitiger Abbruch oder zumindest eine Unterbrechung der De-Sulfatierung.

Bei Überschreitung eines vorbestimmten zweiten De-Sulfatierungsgrades, der auf die oben bereits ausführlich beschriebene Art und Weise über den aktuellen Beladungszustand des Katalysators mit Schwefel bestimmt wird und etwa einer Restbeladung von 5 - 15 % bezogen auf den Beladungszustand bei Einleitung der De-Sulfatierung entspricht, ist bereits eine ausreichend hohe katalytische Aktivität zur Gewährleistung einer ordnungsgemäßen Abgasreinigung gegeben und es erfolgt eine Wiederholung des beschriebenen Verfahrens durch Rückkehr zu dem erstgenannten Verfahrensschritt. Nach solch einem endgültigen Abbruch des De-Sulfatierungsvorgangs werden die normalen Betriebsbedingung wieder eingestellt.

Bei Unterschreitung des vorbestimmten zweiten De-Sulfatierungsgrades hingegen, d.h. bei Unterschreitung einer entsprechenden vorbestimmten katalytischen Mindest-Soll-Aktivität, wird von einer nicht ausreichenden Funktionstüchtigkeit des Katalysators ausgegangen, so daß zunächst für eine bestimmte Zeitspanne oder einen vorbestimmten Beobachtungszeitraum bis zum erneuten Vorliegen der Zulässigkeitsvoraussetzungen gewartet und der begonnen De-Sulfatierungsvorgang anschließend zur Gewährleistung einer ordnungsgemäßen Abgasreinigung bis zum Erreichen einer ausreichend guten Entschwefelung, d.h. üblicherweise bis zum Überschreiten des ersten vorbestimmten De-Sulfatierungsgrades, fortgesetzt wird. Anschließend werden wieder normale Betriebsbedingungen eingestellt und es erfolgt durch Rückkehr zu dem erstgenannten Verfahrensschritt eine Wiederholung des beschriebenen Verfahrens.

Um die zum Aufheizen des NOx-Speicherkatalysators eingesetzte Energie nicht zu verlieren, wird die Katalysatortemperatur innerhalb des Beobachtungszeitraums durch abschwächende temperaturerhaltende Maßnahmen zunächst beibehalten und erst nach Fortbestehen der Unzulässigkeit nach Ablauf diese Zeitraums auf normale Betriebswerte abgesenkt. In dem Beobachtungszeitraum wird die Vorgabe des Lambdasignals unabhängig vom Katalysator- und Motorzustand soweit ins Magere oder Stöchiometrische verschoben, daß keine Entschwefelung mehr erfolgt, während man die Spätzündung zum Halten der Katalysatortemperatur weiterlaufen läßt. Hierdurch wird die De-Sulfatierung sozusagen "eingefroren". Erst wenn innerhalb des Beobachtungszeitraums der Status "De-Sulfatierung zulässig" nicht wieder erreicht wird, werden auch die temperatursteigernden Maßnahmen für den NOₓ-Speicherkatalysator wieder auf die Normalfunktion gesetzt. Zudem kann gegebenenfalls eine festgestellte Funktionsstörung eines der sicherheitsrelevanten Bauteile angezeigt werden.

Im Falle einer zu geringen Fahrgeschwindigkeit erfolgt das "Einfrieren" für etwa 60 - 600 s, insbesondere jedoch für etwa 300 s, mit einer Begrenzung der Nacheinspritzmenge auf etwa 0,2 - 0,3 kg/h, wobei ein Wert von etwa 0,25 kg/h zu bevorzugen ist. Aus sonstigen Gründen erfolgt das "Einfrieren" für etwa 30 - 300 s, insbesondere jedoch für etwa 150 s.

Auch nach Ablauf des Beobachtungszeitraums wird kontinuierlich die Zulässigkeit einer De-Sulfatierung, sowie die Möglichkeit zu deren Durchführung weiter überprüft, um den abgebrochenen De-Sulfatierungsvorgang durch Weiterführen so bald wie möglich zu beenden und damit die volle Funktionstüchtigkeit des NOₓ-Speicherkatalysators wieder herstellen zu können.

Zusätzlich hierzu erfolgt in einem weiteren Verfahrensschritt eine Emissionsüberwachung des aus dem NOₓ-Speicherkatalysator ausströmenden Abgases durch Messung seines Stickoxidgehaltes mittels eines nachgeschalteten NOₓ-Sensors und Vergleich dieser Meßwerte mit der auf die oben genannte Art und Weise berechneten oder prognostizierten maximal zulässigen Stickoxidemission.

Bei Überschreitung einer vorbestimmten ersten Toleranzschwelle oder Abweichung bezüglich der berechneten Stickoxidemission für eine bestimmte erste Zeitspanne oder bei Auftreten eines vorbestimmten charakteristischen Abweichmusters zwischen der gemessenen und der berechneten Stickoxidemission wird von einer schwefelbedingten Beeinträchtigung der Katalysatoraktivität ausgegangen, zu deren Behebung unabhängig von der ermittelten aktuellen Schwefelbeladung des Katalysators eine vorzeitige De-Sulfatierung eingeleitet wird. Zudem erfolgt eine entsprechende Meldung an eine zugeordnete OBD-Kontrolleinrichtung. Die verwendete Toleranzschwelle liegt hierbei unterhalb einer OBD-relevanten Schädigungsschwelle, um beispielsweise auch beim Tanken hochverschwefelten Kraftstoffs durch Durchführung rechtzeitiger und wirkungsvoller De-Sulfatierungen stets eine ordnungsgemäße Funktionsweise des Katalysators gewährleisten zu können.

Die überprüften charakteristischen Abweichmuster vom prognostizierten oder berechneten Verhalten umfassen hierbei typischerweise die folgenden Schädigungsbilder, die sowohl jeweils für sich als auch gemeinsam auftreten können:
- Nach einer NOₓ-Regeneration wird zunächst eine gute NOₓ-Einlagerung gemessen, die Sättigung setzt jedoch schneller und stärker als berechnet ein.
- Nach einer NOₓ-Regeneration wird sofort ein stärkerer NOₓ-Durchbruch gemessen, als nach den Berechnungen zu erwarten ist.
- Beim Umschalten vom Magerbetrieb auf einen Betrieb mit λ < 1 sind hinter dem NOₓ-Speicherkatalysator gegenüber dem Frischzustand Abweichungen im Lambda-Wert meßbar, die auf eine Schwefelvergiftung hindeuten. Das bedeutet insbesondere, daß zu Beginn und/oder am Ende einer NOₓ-Regeneration NOₓ-Emissionspeaks auftreten können, die das Rohemissionsniveau erreichen und sogar um mehr als 100 % überschreiten können.

Liegen die gemessenen Emissionswerte zumindest für eine bestimmte zweite Zeitspanne zumindest eine vorbestimmte zweite Abweichung oder Toleranzschwelle unterhalb der anhand der Betriebsbedingungen berechneten oder prognostizierten Stickoxidemission, so ist die katalytische Aktivität des NOₓ-Speicherkatalysators noch deutlich höher als dies auf Grund der berechneten Schwefelbeladung des Katalysators eigentlich zu erwarten wäre. Dieser ist damit noch ausreichend funktionstüchtig, um zumindest noch für eine gewisse Zeit eine ordnungsgemäße Abgasreinigung zu gewährleisten, so daß die auf Grund der berechneten hohen Schwefelbeladung eigentlich durchzuführende De-Sulfatierung unterbleiben kann. Die Einleitung einer entsprechenden Maßnahme wird daher zumindest bis zum Unterschreiten einer bestimmten katalytischen Mindestaktivität, d.h. insbesondere bis zum Überschreiten der Toleranzschwelle, vorzugsweise jedoch bis zum Erreichen der maximal zulässigen Stickoxidemission oder bis zum Auftreten des vorbestimmten charakteristischen Abweichmusters, unterdrückt, so daß beispielsweise bei einem Betrieb mit schwefelarmem Kraftstoff unnötige De-Sulfatierungen unterbleiben und die damit zwangsläufig verbundene thermische Belastung des Katalysators minimiert wird.

Die genannten Zeitspannen bei der erfindungsgemäßen Emissionsüberwachung können sowohl übereinstimmen als auch abweichend voneinander gewählt werden.

Der Vollständigkeit halber sei bemerkt, daß die erste und/oder die zweite Toleranzschwelle in speziellen Ausführungsbeispielen auch gleich Null gewählt werden können, so daß nur die Abweichung von der prognostizierten Stickoxidemission überprüft wird.

Die erfindungsgemäße Emissionsüberwachung ermöglicht somit im Unterschied zu herkömmlichen Verfahren auch ohne Verwendung eines entsprechenden Sensors zur Bestimmung des Schwefelgehaltes im Kraftstoff oder Abgas eine sehr flexible und wirkungsvolle Anpassung des jeweiligen Zeitpunktes und der Anzahl der erforderlichen De-Sulfatierungsvorgänge an den Schwefelgehalt des jeweils verwendeten Kraftstoffs, die mit möglichst minimalen Eingriffen in das Betriebsverhalten des Katalysators und der ihm zugeordneten Brennkraftmaschine eine stets ausreichend hohe Katalysatoraktivität zur Erzielung einer ordnungsgemäßen Abgasreinigung gewährleistet.

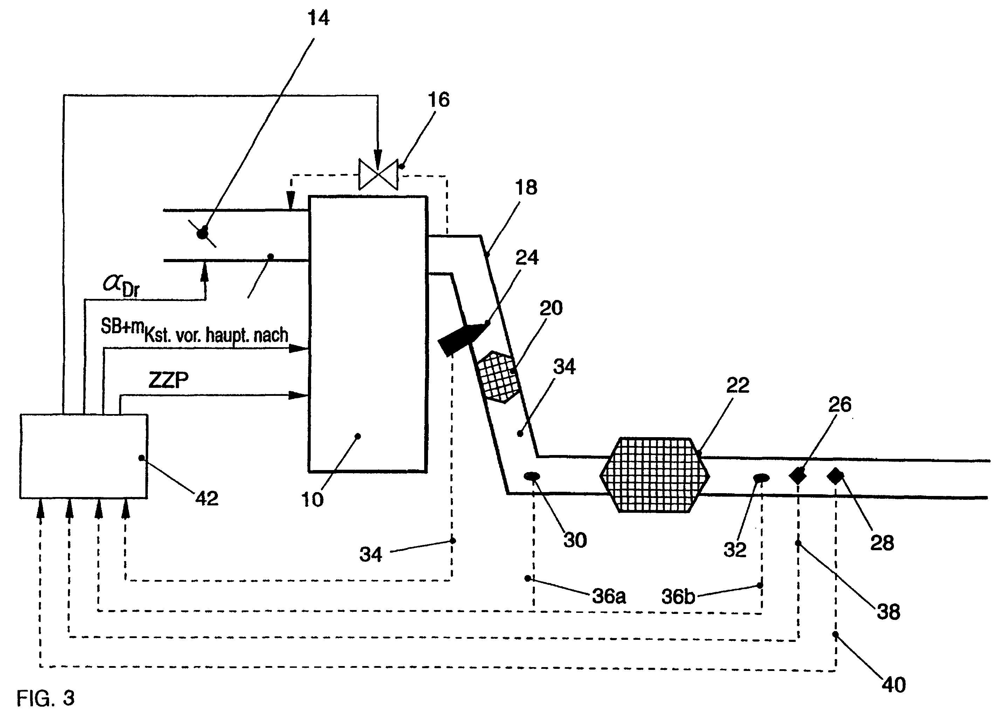

Fig. 3 zeigt in schematischer Darstellung einen zur Durchführung des erfindungsgemäßen Verfahrens geeigneten Motor 10 mit einem vorgeschalteten Saugrohr 12 und einer darin eingebauten Drosselklappe 14, die hinter nicht dargestellten Ladedruck- und Temperatursensoren, aber vor einer EGR-Einleitung 16 (EGR = Abgasrückführung), angeordnet ist und zur Reduzierung des Luft/Kraftstoff-Verhältnisses Lambda dient. Die Ansteuerung der Drosselklappe 14 erfolgt entweder über ein pulsweitenmoduliertes Signal mit fester Frequenz, welches sich aus dem Tastverhältnis der Ansteuerung ergibt, oder durch eine CAN-Botschaft, die prozentual die Stellung der Drosselklappe 14 beschreibt. Die Ruhe- und Notlaufstellung der Drosselklappe 14 ist grundsätzlich in der Stellung "offen". Die Definition, welcher Wert des Ansteuerungssignals welcher Drosselklappenstellung entspricht, ist per Software einstellbar.

Das Abgas des Motors 10 gelangt über eine Abgasleitung 18 in eine einen Vorkatalysator 20 und einen NOₓ-Speicherkatalysator 22 umfassende Abgasreinigungsvorrichtung. Dem Vorkatalysator 20 ist eine Breitband-Lambdasonde 24 zur Messung des Lambda-Wertes vorgeschaltet, die zusätzlich oder alternativ zu einer Berechnung des Lambda-Wertes erfolgt. Die Breitband-Lambdasonde 24 kann über eine dem NOₓ-Speicherkatalysator 22 nachgeschaltete Sprungantwort-Lambdasonde 26 geführt werden. Alternativ hierzu kann jedoch auch das Signal eines dem NOₓ-Speicherkatalysator 22 ebenfalls nachgeschalteten NOₓ-Sensors 28 zur Führung der Breitband-Lambdasonde 24 verwendet werden, so daß die Sprungantwort-Lambdasonde 26 nicht unbedingt erforderlich ist. Der NOₓ-Sensor 28 dient zur Bestimmung von Unregelmäßigkeiten der Katalysatoraktivität durch Messung der Stickoxidemission.

Vor dem NOₓ-Speicherkatalysator 22 und hinter dem NOₓ-Speicherkatalysator 22 ist jeweils ein Temperaturfühler 30 bzw. 32 zur Überwachung der minimal bzw. maximal zulässigen De-Sulfatierungstemperatur angeordnet. Die Temperaturfühler 30 bzw. 32 dienen zudem zur Überwachung der für eine NOₓ-Regeneration erforderlichen Mindesttemperatur sowie zur Steuerung der optimalen NOₓ-Einlagerung. Durch Vergleich der Ausgangstemperatur des NOₓ-Speicherkatalysators 22 mit der Eingangstemperatur kann dessen katalytische Aktivität überwacht werden. Wenn der Temperaturfühler 30 nicht unmittelbar vor dem NOₓ-Speicherkatalysator 22 sondern direkt hinter dem Vorkatalysator 20 angeordnet ist, muß auf die oben bereits ausführliche Art und Weise eine Temperaturkorrektur des Vorrohres 34 errechnet werden. Bei Vorliegen eines hinreichend exakten Katalysatortemperaturmodells kann auf den hinter dem NOₓ-Speicherkatalysator (22) angeordneten Temperaturfühler (32) auch verzichtet werden.

Die Meßsignale der Breitband-Lambdasonde 24, der Temperaturfühler 30, 32, der Sprungantwort-Lambdasonde 26 und des NOₓ-Sensors 28 liegen über Leitungen 34, 36, 38, 40 an einer zugeordneten Steuereinrichtung 42 zur Steuerung des Motors 10 an.

## Patentansprüche

1. Verfahren zur De-Sulfatierung eines einer mager betriebenen Brennkraftmaschine (10) nachgeschalteten NOₓ-Speicherkatalysators (22), das folgende Verfahrensschritte umfasst:
a.) Bestimmung des Beladungszustandes des NOₓ-Speicherkatalysators (22) mit Schwefel und Vergleich der ermittelten Beladungswerte mit einem vorbestimmten ersten Schwefelbeladungsschwellenwert;
b.) Überprüfung der Zulässigkeit einer De-Sulfatierung durch Überprüfung der ordnungsgemäßen Funktionsweise sicherheitsrelevanter Bauteile und/oder durch Überprüfung der aktuellen Fahrsituation auf Einhaltung vorbestimmter Fahrparameter;
c.) Überprüfung, ob durch Einhaltung vorbestimmter De-Sulfatierungsparameter die Möglichkeit zur Durchführung einer De-Sulfatierung gegeben ist;
d.) bei Überschreitung des ersten Schwefelbeladungsschwellenwertes und bei Zulässigkeit einer De-Sulfatierung gegebenenfalls Einstellung der erforderlichen De-Sulfatierungsparameter, falls diese noch nicht vorliegen sollten, und Einleitung einer De-Sulfatierung, während bei Unzulässigkeit einer solchen Maßnahme zunächst bis zum Vorliegen der Zulässigkeitsvoraussetzungen gewartet und/oder eine festgestellte Funktionsstörung eines der sicherheitsrelevanten Bauteile signalisiert wird; und
e.) Durchführung der De-Sulfatierung bis zum Erreichen eines vorbestimmten ersten De-Sulfatierungsgrades, Einstellung normaler Betriebsbedingungen und Rückkehr zu dem Verfahrensschritt a.); oder vorzeitiger Abbruch oder Unterbrechung des De-Sulfatierungsvorgangs, falls die aktuellen Ergebnisse der Zulässigkeitsüberprüfung des Verfahrensschrittes b.) dies erfordern; bei Unterschreitung eines vorbestimmten zweiten De-Sulfatierungsgrades Einstellung normaler Betriebsbedingungen und Rückkehr zu dem Verfahrensschritt a.), ansonsten Warten bis zum erneuten Vorliegen der Zulässigkeitsvoraussetzungen und Fortsetzung des De-Sulfatierungsvorgangs gemäß Verfahrensschritt e.) und/oder Signalisierung einer festgestellten Funktionsstörung eines der sicherheitsrelevanten Bauteile;
f.) Emissionsüberwachung des aus dem NOₓ-Speicherkatalysator (22) ausströmenden Abgases durch Messung seines Stickoxidgehaltes und Vergleich dieser Messwerte mit einer vorbestimmten maximal zulässigen Stickoxidemission; und
g.) unabhängig von der aktuellen Schwefelbeladung des NOₓ-Speicherkatalysators (22) vorzeitige Einleitung einer De-Sulfatierung gemäß Verfahrensschritt d.) bei Überschreitung einer vorbestimmten maximal zulässigen Abweichung oder beim Auftreten eines vorbestimmten charakteristischen Abweichmusters zwischen der vorbestimmten und der gemessenen Stickoxidemission, wobei die maximale Abweichung oder das vorbestimmte charakteristische Abweichmuster zwischen der vorbestimmten und der gemessenen Stickoxidemission die folgenden Abweichungen vom normalen Betriebsverhalten umfassen:
• Nach einer NOₓ-Regeneration wird zunächst eine gute NOₓ-Einlagerung gemessen, die Sättigung setzt jedoch schneller und stärker als berechnet ein; und/oder
• Nach einer NOₓ-Regeneration wird sofort ein stärkerer NOₓ-Durchbruch gemessen als nach den Berechnungen zu erwarten ist;
**dadurch gekennzeichnet**,
h.) dass die Einleitung einer gemäß Verfahrensschritt d.) erforderlichen De-Sulfatierung bei Unterschreitung der vorbestimmten Stickoxidemission um zumindest eine bestimmte Toleranzschwelle zumindest bis zum Überschreiten der Toleranzschwelle oder bis zum Auftreten eines vorbestimmten charakteristischen Abweichmusters hinausgezögert wird.

2. Verfahren nach Anspruch 1, **dadurch gekennzeichnet, dass** als Brennkraftmaschine (10) ein direkteinspritzender Ottomotor oder ein Dieselmotor verwendet wird.

3. Verfahren nach Anspruch 1 oder 2, **dadurch gekennzeichnet, dass** der Beladungszustand des NOₓ-Speicherkatalysators (22) mit Schwefel für Lambda-Werte größer oder gleich einem dem Beginn der Schwefeleinlagerung entsprechenden Lambda-Schwellenwert und für Katalysatortemperaturen unterhalb der Entschwefelungs-Temperaturschwelle aus dem kumulierten Kraftstoffverbrauch seit der letzten De-Sulfatierung berechnet wird.

4. Verfahren nach Anspruch 3, **dadurch gekennzeichnet, dass** die berechneten Werte über Korrekturkennfelder oder Korrekturkennlinien für die Katalysatortemperatur und/oder die Raumgeschwindigkeit/den Abgasmassenstrom und/oder die gespeicherte NOₓ-Masse und/oder die gespeicherte SOₓ-Masse und/oder den Lambda-Wert korrigiert werden.

5. Verfahren nach Anspruch 3 oder 4, **dadurch gekennzeichnet, dass** bei den Berechnungen vom gesetzlich maximal zulässigen Schwefelgehalt im Kraftstoff ausgegangen wird.

6. Verfahren nach Anspruch 3, **dadurch gekennzeichnet, dass** die bei Lambda-Werten unterhalb dieses Lambda-Schwellenwertes und bei ausreichend hohen Katalysatortemperaturen oberhalb der Entschwefelungs-Temperaturschwelle erfolgende Schwefelentladung über das Reduktionsmittelangebot und/oder die Katalysatortemperatur, und/oder den aktuellen Schwefel-Beladungszustand, und/oder den Abgasmassenstrom, und/oder den Schwefel-Beladungszustand zu Beginn der De-Sulfatierung und/oder den Lambda-Wert berechnet wird.

7. Verfahren nach einem der vorhergehenden Ansprüche, **dadurch gekennzeichnet, dass** als sicherheitsrelevante Bauteile die der Brennkraftmaschine (10) zugeordneten Einspritz-, Ansaug- und Abgaseinrichtungen überprüft werden.

8. Verfahren nach einem der vorhergehenden Ansprüche, **dadurch gekennzeichnet, dass** die Fahrsituation aus einem Schwellenwert für den Pedalwertgeber PWG und/oder der Einspritzmenge und/oder der Drehzahl und/oder einem Schuberkennungssignal und/oder einem Bremssignal und/oder einem Drehzahlgradienten abgeleitet wird.

9. Verfahren nach einem der vorhergehenden Ansprüche, **dadurch gekennzeichnet, dass** die vorbestimmten Fahrparameter eine bestimmte Mindestgeschwindigkeit, einen bestimmten Drehzahl- oder Lastbereich und einen bestimmten Bereich von Laständerungswünschen oder der PWG-Geschwindigkeit umfassen.

10. Verfahren nach einem der vorhergehenden Ansprüche, **dadurch gekennzeichnet, dass** eine De-Sulfatierung innerhalb einer vorbestimmten minimalen Erholungszeit nach der ordnungsgemäßen Beendigung oder dem vorzeitigen Abbruch bzw. der Unterbrechung des vorangegangenen De-Sulfatierungsvorgangs als unzulässig erachtet wird.

11. Verfahren nach einem der vorhergehenden Ansprüche, **dadurch gekennzeichnet, dass** die zum Einstellen des De-Sulfatierungszustandes erforderliche eigentliche Vorbereitungs- oder Aufheizzeit und die zur Durchführung der De-Sulfatierung erforderliche De-Sulfatierungsdauer bestimmt werden und dass eine Fortsetzung des De-Sulfatierungsvorgangs nach Überschreitung einer maximal zulässigen Vorbereitungszeit und/oder De-Sulfatierungsdauer als unzulässig erachtet wird.

12. Verfahren nach einem der vorhergehenden Ansprüche, **dadurch gekennzeichnet, dass** die Anzahl der nach einer vorgezogenen De-Sulfatierung durchgeführten De-Sulfatierungen bestimmt und mit einer vorbestimmten Mindestanzahl aufeinanderfolgender De-Sulfatierungen verglichen wird, und dass beim Auftreten einer einen bestimmten Wert überschreitenden erneuten Aktivitätsabnahme des NOₓ-Speicherkatalysators (22) vor Erreichen dieser Mindestanzahl weitere De-Sulfatierungen als unzulässig erachtet werden und/oder eine entsprechende Meldung an eine der Brennkraftmaschine (10) zugeordnete OBD-Einrichtung (OBD = On-Board-Diagnose) erfolgt.

13. Verfahren nach einem der vorhergehenden Ansprüche, **dadurch gekennzeichnet, dass** die vorbestimmten De-Sulfatierungsparameter bestimmte Bereiche der Katalysatortemperatur und des Lambda-Wertes umfassen.

14. Verfahren nach einem der vorhergehenden Ansprüche, **dadurch gekennzeichnet, dass** der Verfahrensschritt d.) und die auf ihn folgenden Verfahrensschritte auch bereits vor Überschreitung des ersten Schwefelbeladungsschwellenwertes durchgeführt werden, wenn eine De-Sulfatierung des NOₓ-Speicherkatalysators (22) von einer der Brennkraftmaschine (10) zugeordneten OBD-Einrichtung als erforderlich erachtet wird.

15. Verfahren nach einem der vorhergehenden Ansprüche, **dadurch gekennzeichnet, dass** die Einstellung der erforderlichen De-Sulfatierungsparameter erst nach Ablauf einer vorbestimmten ersten Zeitspanne und/oder nach Überschreitung zumindest eines weiteren Schwefelbeladungsschwellenwertes erfolgt.

16. Verfahren nach einem der vorhergehenden Ansprüche, **dadurch gekennzeichnet, dass** die Einstellung der erforderlichen De-Sulfatierungsparamter die folgenden Maßnahmen umfasst, die einzeln oder in Abhängigkeit vom Betriebspunkt sowie der Abgas- und Katalysatortemperatur auch in Kombination ergriffen werden können:
1. Homogener Betrieb mit Lambda ≈ 1 im gesamten Kennfeld.
2. Spätzündung bei homogenem Betrieb.
3. Anhebung der Leerlaufdrehzahl bei einem Betrieb mit Lambda ≈ 1.
4. Anhebung der Lambda-Regelamplitude und der Lambda-Regelfrequenz bei einem Betrieb mit Lambda ≈ 1.
5. Zylinderselektiver Mager-Fett-Betrieb bei einem Betrieb mit Lambda ≈ 1.
6. Nacheinspritzung während oder nach Brennende:
a. bei geschichtet magerem Grundbetrieb auf Lambda ≈ 1;
b. bei homogen magerem Grundbetrieb auf Lambda ≈ 1;
c. bei homogenem Betrieb mit Lambda ≈ 1 auf Lambda < 1.
7. Sekundärlufteinblasung bei Lambda << 1 bei Vorhandensein einer Sekundärluftpumpe (SLP).

17. Verfahren nach Anspruch 16, **dadurch gekennzeichnet, dass** der Lambda-Sollwert während der Ermöglichung der De-Sulfatierung durch Einstellung geeigneter De-Sulfatierungsparameter ausgehend von einem Lambda-Grundwert in Abhängigkeit von der Abgastemperatur und/oder der Leerlaufdrehzahl und/oder der Einspritzmenge und dem Einspritzpunkt der Homogen-, Schicht- und Nacheinspritzung und/oder der Wobblefrequenz und der Wobbleamplitude des Lambdasignals und/oder dem Maß der Zylinderverstimmung und/oder der über eine Sekundärluftpumpe (SLP) zusätzlich eingebrachten Luftmasse und/oder der Zeit seit Überschreitung der Katalysatortemperatur, bei der die De-Sulfatierung einsetzt, über Kennlinien bzw. Kennfelder korrigiert wird.

18. Verfahren nach Anspruch 16 oder 17, **dadurch gekennzeichnet, dass** der NOx-Speicherkatalysator (22) zum schnellen Aufheizen auf die Soll-De-Sulfatierungstemperatur so lange mit einer höheren Vorlauftemperatur erwärmt wird, bis die mittlere Temperatur des NOₓ-Speicherkatalysators (22) der gewünschten De-Sulfatierungstemperatur entspricht.

19. Verfahren nach Anspruch 18, **dadurch gekennzeichnet, dass** gleichzeitig auf der Basis der von einem Abgastemperatursensor ermittelten Temperatur zwischen dem NOₓ-Speicherkatalysator (22) und einem vorgeschalteten Vorkatalysator (20) die Temperatur im Vorkatalysator (20) und die Vorlauftemperatur des NOₓ-Speicherkatalysators (22) überwacht und so geregelt werden, dass sie eine bestimmte maximal zulässige Vorkatalysatortemperatur bzw. Vorlauftemperatur nicht übersteigen.

20. Verfahren nach Anspruch 19, **dadurch gekennzeichnet, dass** die eigentliche Temperatur des Vorkatalysators (20) kennfeldmäßig aus der gemessenen Abgastemperatur und dem Abgasmassenstrom bestimmt wird, wobei auch die berechnete Schadstoffumsetzung auf dem Vorkatalysator (20) berücksichtigt wird.

21. Verfahren nach Anspruch 20, **dadurch gekennzeichnet, dass** die tatsächlichen Rohemissionen an HC, CO, NOₓ, H₂, O₂ vor dem Vorkatalysator (20) durch multiplikative Zuschläge für die Kühlmitteltemperatur und die Drehzahl-Last-Dynamik aus einem Rohemissionskennfeld ermittelt werden.

22. Verfahren nach Anspruch 21, **dadurch gekennzeichnet, dass** ab einer für die De-Sulfatierung relevanten Temperatur von mehr als 300 °C von einer idealen Umsetzung der Schadstoffe von 100 % ausgegangen wird, wobei Abschläge von diesem Wert durch die Raumgeschwindigkeit berücksichtigt werden.

23. Verfahren nach Anspruch 19, **dadurch gekennzeichnet, dass** die gemessene Vorlauftemperatur um die Lauflänge und die geometrische Ausführung des Vorrohres sowie die Umströmung des Vorrohres mit Umgebungsluft korrigiert wird.

24. Verfahren nach Anspruch 19, **dadurch gekennzeichnet, dass** die maximal zulässige Vorlauftemperatur berechnet wird, indem von einem Rohwert die Temperaturerhöhung durch die Rest-Schadstoffkonvertierung auf dem NOₓ-Speicherkatalysator (22) subtrahiert wird.

25. Verfahren nach Anspruch 24, **dadurch gekennzeichnet, dass** die Rest-Schadstoffkonvertierung auf dem NOₓ-Speicherkatalysator (22) aus dem Schadstoff-Durchbruch durch den Vorkatalysator (20) und dem Abgasmassenstrom berechnet wird.

26. Verfahren nach Anspruch 16, **dadurch gekennzeichnet, dass** die Spätzündung bei homogenem Betrieb (Maßnahme 2) erst oberhalb einer bestimmten maximalen Kühlmitteltemperatur eingeleitet wird, die über die Ansauglufttemperatur korrigiert wird.

27. Verfahren nach Anspruch 16, **dadurch gekennzeichnet, dass** sich die Zündwinkelvorgabe beim homogenen Betrieb nach dem spätest möglichen Zündwinkel richtet und in Abhängigkeit von der Katalysator- und/oder Abgastemperatur und/oder der Leerlaufdrehzahl und/oder der Lambda-Vorgabe über Kennlinien korrigiert wird.

28. Verfahren nach Anspruch 16, **dadurch gekennzeichnet, dass** die Regelfrequenz, die Regelamplitude und die Steilheit der Flanken beim Ausmagern bzw. Anfetten in Abhängigkeit von der Temperatur eines Vorkatalysators (20) und des NOₓ-Speicherkatalysators (22) geändert werden.

29. Verfahren nach Anspruch 28, **dadurch gekennzeichnet, dass** die Änderung der Regelfrequenz und der Regelamplitude - 50 bis + 250 % bzw. - 20 bis + 400 % beträgt, während die Unterschiede der Steilheit der Flanken beim Ausmagern bzw. Anfetten 10 : 1 bis 1 : 10 betragen.

30. Verfahren nach Anspruch 16, **dadurch gekennzeichnet, dass** zur Realisierung des zylinderselektiven Mager-Fett-Betriebs bei Lambda ≈ 1 zumindest ein Ungleichförmigkeitsfaktor der Einspritzmenge definiert wird, der das maximal zulässige Maß der Verstimmung zwischen den Zylindern angibt und dass der Zündwinkel für jeden Zylinder so angepasst wird, dass von allen Zylindern das gleiche Moment abgegeben wird.

31. Verfahren nach Anspruch 30, **dadurch gekennzeichnet, dass** der zumindest eine Ungleichförmigkeitsfaktor kennfeldmäßig über Last und Drehzahl ermittelt und über die Temperatur der Brennkraftmaschine und die Abgastemperatur korrigiert wird.

32. Verfahren nach Anspruch 31, **dadurch gekennzeichnet, dass** bei Annäherung an die maximal zulässige Vorkatalysator- bzw. Speicherkatalysatortemperatur eine zusätzliche Korrektur erfolgt.

33. Verfahren nach Anspruch 16, **dadurch gekennzeichnet dass** bei der Zylindervertrimmung eine Maximalvertrimmung definiert wird, die über die Temperatur der Brennkraftmaschine (10), die Temperatur eines Vorkatalysators (20) und die Temperatur des NOₓ-Speicherkatalysators (22) korrigiert wird.

34. Verfahren nach Anspruch 33, **dadurch gekennzeichnet, dass** die Maximalvertrimmung statisch bis zu ± 50 % beträgt.

35. Verfahren nach Anspruch 34, **dadurch gekennzeichnet, dass** der statische Wert um maximal ± 95 % von der Abweichung korrigiert wird.

36. Verfahren nach Anspruch 16, **dadurch gekennzeichnet, dass** die Nach-Einspritzmenge bei der Nacheinspritzung nach Brennende über die Differenz zwischen dem berechneten Brennraum-Lambda-Wert und einer Brennraum-Lambda-Vorgabe errechnet wird.

37. Verfahren nach Anspruch 36, **dadurch gekennzeichnet, dass** die Überwachung und Korrektur der errechneten Nacheinspritzmenge über den gemessenen Lambda-Wert des Abgases erfolgt, wobei der Einspritzzeitpunkt zündzeitpunkt-, mengen-, last- und drehzahlabhängig so gelegt wird, dass die zusätzlich eingebrachte Kraftstoffmenge sicher nicht mehr verbrennt, dass aber ein vollständiges Austragen im Ausschubtakt möglich ist.

38. Verfahren nach Anspruch 37, **dadurch gekennzeichnet, dass** zur Ermöglichung der De-Sulfatierung ein gerechnetes Lambdasignal bezogen auf den Verbrennungsvorgang ohne Nacheinspritzung weitergeleitet wird, falls zur Zumessung der Homogen- bzw. Schicht-Einspritzmenge eine Rückmeldung von Lambdasignalen erforderlich ist.

39. Verfahren nach einem der Ansprüche 36 bis 38, **dadurch gekennzeichnet, dass** bei der Nacheinspritzung während des Brennendes zusätzlich eine kennfeldmäßige Korrektur der Einspritzmenge der Haupteinspritzung erfolgt.

40. Verfahren nach Anspruch 39, **dadurch gekennzeichnet, dass** die noch verbrannte Nacheinspritz-Kraftstoffmenge und der Wirkungsgrad dieses Verbrennungsanteils in Abhängigkeit vom Einspritzzeitpunkt, der Einspritzdauer, vom Zündzeitpunkt und der Drehzahl ermittelt und die Haupteinspritzmenge entsprechend reduziert wird.

41. Verfahren nach einem der Ansprüche 36 bis 40, **dadurch gekennzeichnet, dass** die Nacheinspritzung während oder nach Brennende bei homogenem Betrieb mit Lambda ≈ 1 auf Lambda < 1 durch die Einblasung von Sekundärluft unterstützt wird.

42. Verfahren nach Anspruch 41, **dadurch gekennzeichnet, dass** der Temperaturverlauf eines Vorkatalysators (20) und des NOₓ-Speicherkatalysators (22) berücksichtigt wird, wobei neben der errechneten Temperatur auch der Temperaturgradient bei Annäherung an die jeweils zulässigen Maximaltemperaturen maßnahmebegrenzend wirken.

43. Verfahren nach einem der vorhergehenden Ansprüche, **dadurch gekennzeichnet, dass** die Lambda-Vorgabe während der De-Sulfatierung spätestens bei Überschreitung der Katalysatortemperatur zeitlich variiert wird, bei der eine De-Sulfatierung einsetzt.

44. Verfahren nach Anspruch 43, **dadurch gekennzeichnet, dass** zunächst ein von der Temperatur des NOₓ-Speicherkatalysators (22) abhängiger Lambda-Grundwert festgelegt und über die aktuelle Schwefelbeladung und über die Schwefelbeladung zu Beginn des Ermöglichens der De-Sulfatierung zu einer quasistatistischen Lambdavorgabe für die Durchführung der De-Sulfatierung korrigiert wird.

45. Verfahren nach Anspruch 44, **dadurch gekennzeichnet, dass** die quasistatistische nur langsam veränderliche Lambdavorgabe mit einer in Frequenz, Amplitude und Regelform veränderbaren Schwingung überlagert wird, die abhängig ist von der Lambdavorgabe selbst, der aktuellen Schwefelbeladung, der Schwefelbeladung zu Beginn der Ermöglichens der De-Sulfatierung, der Katalysatortemperatur sowie der Abweichung zwischen gemessener und berechneter Katalysatoraktivität.

46. Verfahren nach Anspruch 45, **dadurch gekennzeichnet, dass** die Steilheit der Ausmagerungs- zur Anfettungsflanke 10 : 1 bis 1 : 10 beträgt.

47. Verfahren nach einem der vorhergehenden Ansprüche, **dadurch gekennzeichnet, dass** die Temperatur des NOₓ-Speicherkatalysators (22) während des De-Sulfatierungsvorgangs überwacht wird.

48. Verfahren nach Anspruch 47, **dadurch gekennzeichnet, dass** die Maßnahmen zur Erhöhung der Katalysatortemperatur bei Überschreitung eines während der De-Sulfatierung zumindest einzuhaltenden Schwellenwertes der Katalysatortemperatur so weit zurückgenommen werden, dass die für die De-Sulfatierung vorgegebene Soll-De-Sulfatierungstemperatur innerhalb vorbestimmter Grenzen gehalten wird.

49. Verfahren nach Anspruch 48, **dadurch gekennzeichnet, dass** die vorbestimmten Grenzen ± 50 bis ± 150 °C betragen.

50. Verfahren nach Anspruch 48 oder 49, **dadurch gekennzeichnet, dass** die Soll-De-Sulfatierungstemperatur aus der aktuellen Schwefelbeladung des NOₓ-Speicherkatalysators (22) und der Schwefelbeladung zu Beginn des De-Sulfatierungsvorgangs berechnet wird.

51. Verfahren nach einem der Ansprüche 48 bis 50, **dadurch gekennzeichnet, dass** die Soll-De-Sulfatierungstemperatur entsprechend der ermittelten Abweichung zwischen gemessener und berechneter Katalysatoraktivität korrigiert wird.

52. Verfahren nach einem der vorhergehenden Ansprüche, **dadurch gekennzeichnet, dass** die Katalysatortemperatur bei einer Unterbrechung des De-Sulfatierungsvorgangs durch abschwächende temperaturerhaltende Maßnahmen beibehalten und der Lambda-Wert so weit ins Magere verschoben wird, dass keine De-Sulfatierung mehr erfolgt.

53. Verfahren nach Anspruch 52, **dadurch gekennzeichnet, dass** die Katalysatortemperatur auf normale Betriebswerte abgesenkt wird, wenn der begonnene De-Sulfatierungsvorgang nicht innerhalb einer vorbestimmten zweiten Zeitspanne fortgesetzt werden kann.

54. Verfahren nach einem der vorhergehenden Ansprüche, **dadurch gekennzeichnet, dass** das vorbestimmte charakteristische Abweichmuster zwischen der vorbestimmten und der gemessenen Stickoxidemission gemäß Verfahrensschritt h.) zusätzlich oder auch alternativ zu den Abweichungen vom normalen Betriebsverhalten gemäß Verfahrensschritt g.) auch das Auftreten charakteristischer NOₓ-Emissionspeaks zu Beginn und/oder am Ende einer NOₓ-Regeneration umfasst, die das Rohemissionsniveau erreichen und sogar um mehr als 100 % überschreiten können.

## Claims

1. Method for desulfating an NOₓ storage catalyst (22) connected downstream of a lean-mix internal combustion engine (10), providing the following procedural stages:
a.) Determining the charge status of the NOₓ storage catalyst (22) with sulfur and comparing the determined charge values with a predetermined, initial sulfur-charge threshold value;
b.) Checking the permissibility of desulfation by checking the correct functioning of safety-relevant components and/or by checking the current driving situation for observance of predetermined driving parameters;
c.) Checking whether the observance of predetermined desulfation parameters permits the implementation of a desulfation process;
d.) If the initial sulfur-charge threshold value has been exceeded and the permissibility of a desulfation process has been established, optionally setting the required desulfation parameters, if these are not already available, and initiating a desulfation process, but, if a measure of this kind is not permissible, initially waiting until the permissibility criteria are present and/or until the identification of a functional disorder in one of the safety-relevant components is signalled;
e.) Implementing the desulfation process until a predetermined, initial degree of desulfation is reached, setting normal operating conditions and returning to procedural stage a.); or premature termination or interruption of the desulfation process, if the current results of the permissibility check in procedural stage b.) demand this; if the results fall short of a predetermined, second degree of desulfation, setting normal operating conditions and returning to procedural stage a.), otherwise waiting until the renewed presence of the permissibility criteria and continuing the desulfation process in accordance with procedural stage e.) and/or signalling the identification of a functional disorder in one of the safety-relevant components;
f.) Monitoring emissions from the exhaust gas flowing from the NOₓ storage catalyst (22) by measuring its content of nitrogen oxides and comparing these measured values with a predetermined, maximum permissible nitrogen oxide emission;
g.) Independently of the current sulfur charge of the NOₓ storage catalyst (22), prematurely initiating a desulfation process in accordance with procedural stage d.) whenever a predetermined, maximum permissible deviation is exceeded or whenever a predetermined, characteristic deviation pattern occurs between the predetermined nitrogen oxide emission and the measured nitrogen oxide emission, wherein the maximum deviation or the predetermined characteristic deviation pattern between the predetermined nitrogen oxide emission and the measured nitrogen oxide emission comprise the following deviations from the normal operating behaviour:
- After an NOₓ regeneration, a good NOₓ deposition is initially measured, but saturation occurs more rapidly and more strongly than calculated; and/or
- After an NOₓ regeneration, a stronger NOₓ breakthrough is measured than might be expected according to the calculations;
**characterised in that**
h.) If there is a short-fall in the predetermined nitrogen oxide emission, the initiation of a desulfation process required according to procedural stage d.) is delayed by at least a given tolerance threshold at least until the tolerance threshold is exceeded or until the occurrence of a predetermined characteristic deviation pattern.

2. Method according to claim 1, **characterised in that** a direct-injection spark-ignition engine or diesel engine is used as the internal combustion engine (10).

3. Method according to claim 1 or 2, **characterised in that**, for lambda values greater than or equal to a lambda-threshold value corresponding to the start of sulfur deposition and for catalyst temperatures below the desulfation temperature threshold, the sulfur-charge status of the NOₓ storage catalyst (22) is calculated from the accumulated fuel consumption since the last desulfation process.

4. Method according to claim 3, **characterised in that** the calculated values are corrected with reference to correction-characteristic maps or characteristic curves for the catalyst temperature and/or the space velocity/exhaust-gas mass flow and/or the stored mass of NOₓ and/or the stored mass of SOₓ and/or the lambda value.

5. Method according to claim 3 or 4, **characterised in that** the calculations are based on the legal maximum permissible sulfur content in the fuel.

6. Method according to claim 3, **characterised in that** the sulfur discharging, carried out in the case of lambda values below this lambda-threshold value and in the case of sufficiently high catalyst temperatures above the desulfation-temperature threshold, is calculated via the supply of reducing agent and/or the catalyst temperature, and/or the current sulfur-charge status, and/or the exhaust-gas mass flow, and/or the sulfur-charge status at the start of desulfation and/or the lambda value.

7. Method according to any one of the preceding claims, **characterised in that** the injection system, air intake system and exhaust system allocated to the internal combustion engine (10) are monitored as safety-relevant components.

8. Method according to any one of the preceding claims, **characterised in that** the driving situation is derived from a threshold value for the pedal sensor [PWG] and/or the injection quantity and/or the rotational speed and/or an overrun identification signal and/or a braking signal and/or a rotational speed gradient.

9. Method according to any one of the preceding claims, **characterised in that** the predetermined driving parameters comprise a given minimum velocity, a given range of rotational speed or loading and a given range of requests for changes in loading or pedal-sensor [PWG] velocity.

10. Method according to any one of the preceding claims, **characterised in that** a desulfation process within a predetermined minimum recovery time after the proper termination or the premature termination and/or interruption of the preceding desulfation process is considered impermissible.

11. Method according to any one of the preceding claims, **characterised in that** the actual preparation time or warm-up time required for setting the desulfation status and the desulfation period required for carrying out the desulfation process are measured, and that a continuation of the desulfation process after a maximum permissible preparation time and/or desulfation period have been exceeded is considered impermissible.

12. Method according to any one of the preceding claims, **characterised in that** the number of desulfation processes carried out after a preceding desulfation process is measured and compared with a predetermined minimum number of successive desulfation processes, and that in the event of a renewed reduction in the activity of the NOₓ storage catalyst (22) beyond a given value before the attainment of this minimum number, any further desulfation processes are considered impermissible and/or a corresponding message is issued to an OBD system (On-Board-Diagnosis) allocated to the internal combustion engine (10).

13. Method according to any one of the preceding claims, **characterised in that** the predetermined desulfation parameters comprise given ranges for the catalyst temperature and the lambda value.

14. Method according to any one of the preceding claims, **characterised in that** the procedural stage d.) and the procedural stages following it are implemented even before the initial sulfur-charge threshold value is exceeded, if desulfation of the NOₓ storage catalyst (22) is considered necessary by an OBD system allocated to the internal combustion engine (10).

15. Method according to any one of the preceding claims, **characterised in that** the required desulfation parameters are set only after a predetermined, initial time span has elapsed and/or after at least one further sulfur-charge threshold value has been exceeded.

16. Method according to any one of the preceding claims, **characterised in that** setting the necessary desulfation parameters comprises the following measures, which can be implemented either individually or in combination in dependence upon the operating point and the exhaust gas and catalyst temperature:
1. Homogeneous operation with lambda 1 over the whole characteristic map
2. Late ignition with homogeneous operation
3. Raising the idling speed during operation with lambda 1
4. Raising the lambda control amplitude and the lambda control frequency during operation with lambda 1.
5. Cylinder-selective lean-rich operation during operation with lambda 1
6. Follow-up injection during or after the end of combustion:
a. in the case of layered, lean basic operation with lambda 1;
b. in the case of homogeneous, lean basic operation with lambda 1;
c. in the case of homogeneous operation with lambda 1 to lambda <1.
7. Secondary air input with lambda << 1 in the presence of a secondary air pump [SLP].

17. Method according to claim 16, **characterised in that** the target lambda value is corrected via characteristic curves and/or characteristic maps during the enabling of the desulfation process by setting appropriate desulfation parameters starting from a basic lambda value in dependence upon the exhaust-gas temperature and/or the idling speed and/or the injection quantity and the injection point of the homogeneous, layered and follow-up injection and/or the wobble frequency and the wobble amplitude of the lambda signal and/or the extent of the cylinder detuning and/or of the air volume additionally supplied via a secondary air pump [SLP] and/or of the time since the catalyst temperature at which the desulfation process begins was exceeded.

18. Method according to claim 16 or 17, **characterised in that,** in order to achieve rapid heating up to the target desulfation temperature, the NOₓ storage catalyst (22) is heated at an increased warm-up temperature until the mean temperature of the NOₓ storage catalyst (22) corresponds to the required desulfation temperature.

19. Method according to claim 18, **characterised in that** with reference to the temperature determined by an exhaust gas temperature sensor between the NOₓ storage catalyst (22) and a preliminary catalyst (20) connected upstream, the temperature in the preliminary catalyst (20) and the warm-up temperature of the NOₓ storage catalyst (22) are monitored and controlled at the same time in such a manner that they do not exceed a given maximum permissible preliminary catalyst temperature and/or warm-up temperature.

20. Method according to claim 19, **characterised in that** the actual temperature of the preliminary catalyst (20) is determined, with reference to characteristic maps, from the measured exhaust-gas temperature and the mass flow of exhaust gas, wherein the calculated conversion of pollutants on the preliminary catalyst (20) is also taken into account.

21. Method according to claim 20, **characterised in that** the actual raw emissions of HC, CO, NOₓ, H₂, O₂ before the preliminary catalyst (20) are determined from a characteristic map of raw emissions by multiplicative additions for the cooling agent temperature and the rotational speed-loading dynamics.

22. Method according to claim 21, **characterised in that** above a temperature of more than 300°C which is relevant for the desulfation process, an ideal conversion of 100 % of pollutants is assumed, wherein a reduction from this value resulting from space velocity is taken into account.

23. Method according to claim 19, **characterised in that** the measured warm-up temperature is corrected by the running length and the geometric design of the fore-pipe and the circulatory flow of ambient air around the fore-pipe.

24. Method according to claim 19, **characterised in that** the maximum permissible warm-up temperature is calculated by subtracting the temperature increase resulting from the conversion of the residual pollutants on the NOₓ storage catalyst (22) from a raw value.

25. Method according to claim 24, **characterised in that** the residual pollutant conversion on the NOₓ storage catalyst (22) is calculated from the pollutant breakthrough from the preliminary catalyst (20) and the mass flow of exhaust gas.

26. Method according to claim 16, **characterised in that** the late ignition in the case of homogeneous operation (measure 2) is introduced only above a certain maximum cooling-agent temperature, which is corrected via the air-intake temperature.

27. Method according to claim 16, **characterised in that** the specification of the ignition angle during homogeneous operation is based upon the latest possible ignition angle and corrected via characteristic curves in dependence upon the catalyst and/or exhaust-gas temperature and/or the idling speed and/or the lambda specification.

28. Method according to claim 16, **characterised in that** the control frequency, the control amplitude and the steepness of the edges when making a leaner and/or richer mixture are modified in dependence upon the temperature of a preliminary catalyst (20) and the NOₓ storage catalyst (22).

29. Method according to claim 28, **characterised in that** the modification of the control frequency and control amplitude is -50 to +250% and -20 to +400% respectively, while the differences in the steepness of the edges when making a leaner and/or richer mixture are 10:1 to 1:10.

30. Method according to claim 16, **characterised in that** in order to realise the cylinder-selective lean-rich operation with lambda 1, at least one irregularity factor of the injection quantity is defined, which indicates the maximum permissible degree of detuning between cylinders, and that the ignition angle for each cylinder is adapted in such a manner that the same moment is provided by all cylinders.

31. Method according to claim 30, **characterised in that** the at least one irregularity factor is determined via loading and rotational speed with reference to characteristic maps and corrected via the temperature of the internal combustion engine and the exhaust-gas temperature.

32. Method according to claim 31, **characterised in that** an additional correction is made on approaching the maximum permissible preliminary catalyst temperature and/or storage catalyst temperature.

33. Method according to claim 16, **characterised in that** in the case of cylinder trimming, a maximum trimming is defined, which is corrected via the temperature of the internal combustion engine (10), the temperature of a preliminary catalyst (20) and the temperature of the NOₓ storage catalyst (22).

34. Method according to claim 33, **characterised in that** the maximum trimming is statistically up to ±50%.

35. Method according to claim 34, **characterised in that** the statistical value is corrected by a maximum of ±95% of the deviation.

36. Method according to claim 16, **characterised in that,** in the case of a follow-up injection after the end of combustion, the follow-up injection quantity is calculated with reference to the difference between the calculated combustion-chamber lambda value and a specified combustion-chamber lambda value.

37. Method according to claim 36, **characterised in that** the calculated follow-up injection quantity is monitored and corrected via the measured lambda value of the exhaust gas, wherein the injection time is set in dependence upon the ignition time, quantity, loading and rotational speed, in such a manner that the additionally introduced volume of fuel is certainly no longer burned, but, that complete expulsion is possible on the expulsion stroke.

38. Method according to claim 37, **characterised in that** to enable desulfation, a calculated lambda signal relative to the combustion process without follow-up injection is transmitted, if a reply message of lambda signals is required for the dosing of the homogeneous and/or layered injection quantity.

39. Method according to any one of claims 36 to 38, **characterised in that** in the case of a follow-up injection at the end of combustion, the injection quantity for the main injection is additionally corrected with reference to characteristic maps.

40. Method according to claim 39, **characterised in that** the still un-burned quantity of the follow-up-injection fuel and the degree of efficiency of this combustion component is determined in dependence upon the injection time, the injection duration, the ignition time and the rotational speed, and that the main injection quantity is reduced accordingly.

41. Method according to claim 36 to 40, **characterised in that** the follow-up injection is supported by the introduction of secondary air during or after the end of combustion in the case of homogeneous operation with lambda 1 to lambda < 1.

42. Method according to claim 41, **characterised in that** the temperature course of a preliminary catalyst (20) and of the NOₓ storage catalyst (22) is taken into account, wherein, alongside the calculated temperature, the temperature gradient on approaching the relevant, permissible maximum temperatures also has a limiting effect on the measures.

43. Method according to any one of the preceding claims, **characterised in that** the specified lambda value during desulfation is varied with reference to time at the latest when the catalyst temperature at which desulfation begins is exceeded.

44. Method according to claim 43, **characterised in that** initially, a lambda value dependent on the temperature of the NOₓ storage catalyst (22) is established and that the said value is corrected, via the current sulfur charge and via the sulfur charge at the start of enabling the desulfation, to give a specified quasi-static lambda value for the implementation of desulfation.

45. Method according to claim 44, **characterised in that** an oscillation, which is variable in frequency, amplitude and control form and which is dependent upon the specified lambda value itself, on the current sulfur charge, the sulfur charge at the start of enabling the desulfation, on the catalyst temperature and on the deviation between the measured and calculated catalyst activity, is superimposed over the specified, quasi-static and only slowly-variable lambda value.

46. Method according to claim 45, **characterised in that** the steepness of the leaner-mix to richer-mix edge is 10:1 to 1:10.

47. Method according to any one of the preceding claims, **characterised in that** the temperature of the NOₓ storage catalyst (22) is monitored during the desulfation process.

48. Method according to claim 47, **characterised in that** the measures for increasing the catalyst temperature whenever a threshold value for the catalyst temperature which must be observed at least during desulfation is exceeded, are withdrawn to such an extent that the target desulfation temperature specified for the desulfation process is held within predetermined limits.

49. Method according to claim 48, **characterised in that** the predetermined limits are ±50 to ±150°C.

50. Method according to claim 48 or 49, **characterised in that** the target desulfation temperature is calculated from the current sulfur charge of the NOₓ storage catalyst (22) and the sulfur charge at the start of the desulfation process.

51. Method according to any one of claims 48 to 50, **characterised in that** the target desulfation temperature is corrected according to the determined deviation between the measured and the calculated catalyst activity.

52. Method according to any one of the preceding claims, **characterised in that** the catalyst temperature in the event of an interruption of the desulfation process is retained by means of weakening, temperature-maintaining measures, and that the lambda value is shifted so far into the lean range that desulfation no longer occurs.

53. Method according to claim 52, **characterised in that** the catalyst temperature is reduced to normal operating values, if a desulfation process which has already been started cannot be continued within a predetermined second time span.

54. Method according to any one of the preceding claims, **characterised in that**, either in addition to or as an alternative to the deviations from the normal operating behaviour according to procedural stage g.), the predetermined, characteristic deviation pattern between the predetermined and the measured nitrogen oxide emission in accordance with procedural stage h.), also provides the occurrence of characteristic NOₓ emission peaks at the start and/or at the end of an NOₓ regeneration, which can reach the raw emission level and even exceed it by more than 100 %.

## Revendications

1. Procédé de dé-sulfatation d'un catalyseur de stockage de NOₓ (22) intercalé après un moteur à combustion interne (10) exploité avec un mélange pauvre, comprenant les étapes suivantes :
a) détermination de l'état de charge du catalyseur de stockage de NOₓ (22) en soufre, et comparaison de la valeur de charge déterminée avec une première valeur seuil de charge en soufre prédéterminée ;
b) contrôle d'autorisation d'une dé-sulfatation par contrôle du fonctionnement conforme des pièces ayant trait à la sécurité et/ou par contrôle de la situation de conduite réelle respectant des paramètres de conduite prédéterminés ;
c) contrôle pour voir s'il est possible, par respect de paramètres de dé-sulfatation prédéterminés, de réaliser une dé-sulfatation ;
d) en cas de dépassement de la première valeur seuil de charge en soufre et en cas d'autorisation d'une dé-sulfatation, ajustement éventuel des paramètres de dé-sulfatation nécessaires, si ceux-ci ne prévalaient pas déjà, et initiation d'une dé-sulfatation, tandis qu'en cas de non-autorisation d'une telle mesure, attente jusqu'à l'existence des conditions préalables à l'autorisation et/ou signalisation d'un dysfonctionnement constaté d'une pièce ayant trait à la sécurité ; et
e) réalisation de la dé-sulfatation jusqu'à atteindre un premier degré de dé-sulfatation prédéterminé, réglage des conditions normales de fonctionnement et retour à l'étape de procédé a) ; ou arrêt anticipé ou interruption du processus de dé-sulfatation si les résultats réels du contrôle d'autorisation de l'étape de procédé b) l'exigent ; en cas de niveau inférieur à un second degré pré-déterminé de dé-sulfatation, réglage des conditions normales de fonctionnement et retour à l'étape de procédé a), sinon attente jusqu'à ce qu'existent à nouveau les conditions préalables à l'autorisation et à la poursuite du processus de dé-sulfatation selon l'étape de procédé e) et/ou signalisation d'un dysfonctionnement constaté d'une pièce ayant trait à la sécurité ;
f) contrôle de l'émission du gaz d'échappement sortant du catalyseur de stockage de NOₓ (22) par mesure de sa teneur en oxyde d'azote et comparaison de cette valeur mesurée avec une émission maximale autorisée prédéterminée d'oxyde d'azote ; et
g) indépendamment de la charge réelle en soufre du catalyseur de stockage de NOₓ (22), initiation anticipée d'une dé-sulfatation selon l'étape de procédé d) en cas de dépassement d'une déviation maximum autorisée prédéterminée ou en cas de survenue d'un modèle de déviation caractéristique prédéterminé entre émission d'oxyde d'azote prédéterminée et mesurée, la déviation maximale ou le modèle de déviation caractéristique prédéterminé entre l'émission d'oxyde d'azote prédéterminée et celle mesurée comprenant les déviations suivantes par rapport au comportement normal en exploitation :
• après une régénération des NOₓ, on mesure d'abord un bon stockage des NOₓ, mais la saturation s'instaure plus rapidement et plus fortement que calculé ; et/ou
• après une régénération des NOₓ, on mesure immédiatement une plus forte percée des NOₓ que ce à quoi on s'attend d'après les calculs ;
**caractérisé en ce que,**
h) l'initiation d'une dé-sulfatation nécessaire selon l'étape de procédé d), en cas de niveau inférieur à une émission d'oxyde d'azote prédéterminée d'au moins un seuil de tolérance déterminé, est retardée au moins jusqu'à dépassement du seuil de tolérance ou jusqu'à la survenue d'un modèle de déviation caractéristique prédéterminé.

2. Procédé selon la revendication 1, **caractérisé en ce que** l'on utilise comme moteur à combustion interne (10) un moteur d'automobile à injection directe ou un moteur diesel.

3. Procédé selon la revendication 1 ou 2, **caractérisé en ce que** l'état de charge du catalyseur de stockage de NOₓ (22) en soufre est calculé, pour des valeurs de lambda supérieures ou égales à une valeur seuil de lambda correspondant au début du stockage de soufre et pour des températures du catalyseur inférieures au seuil de température de désulfuration, à partir de la consommation cumulée de carburant depuis la dernière dé-sulfatation.

4. Procédé selon la revendication 3, **caractérisé en ce que** les valeurs calculées sont corrigées par des diagrammes de rectification caractéristiques et des courbes de correction caractéristiques pour la température du catalyseur et/ou la vitesse spatiale/le débit massique des gaz d'échappement et/ou la masse de NOₓ stockée et/ou la masse de SOₓ stockée et/ou la valeur lambda.

5. Procédé selon la revendication 3 ou 4, **caractérisé en ce que** l'on part, pour les calculs, de la teneur en soufre maximale autorisée par la loi dans le carburant.

6. Procédé selon la revendication 3, **caractérisé en ce que** la décharge de soufre se produisant pour des valeurs de lambda inférieures à cette valeur seuil de lambda et à des températures du catalyseur suffisamment élevées au dessus du seuil de température de désulfuration est calculée par l'apport de l'agent de réduction et/ou la température du catalyseur, et/ou l'état de charge réel en soufre, et/ou le débit massique des gaz d'échappement et/ou l'état de charge en soufre au début de la dé-sulfatation, et/ou la valeur de lambda.

7. Procédé selon l'une des revendications précédentes, **caractérisé en ce que** l'on contrôle en tant que pièces ayant trait à la sécurité les dispositifs d'injection, d'aspiration et d'échappement coordonnés au moteur à combustion interne (10).

8. Procédé selon l'une des revendications précédentes, **caractérisé en ce que** la situation de conduite est dérivée d'une valeur de seuil pour le capteur de valeur de pédale et/ou du débit d'injection et/ou du régime et/ou d'un signal d'identification de poussée et/ou d'un signal de freinage et/ou d'un gradient de régime.

9. Procédé selon l'une des revendications précédentes, **caractérisé en ce que** les paramètres de conduite prédéterminés comprennent une vitesse minimale déterminée, une gamme de régimes ou de charges déterminée et une gamme déterminée de souhaits de modification de charge ou de vitesse par le capteur de valeur de pédale.

10. Procédé selon l'une des revendications précédentes, **caractérisé en ce qu'**une dé-sulfatation est considérée comme inadmissible au sein d'un temps de récupération minimal prédéterminé après la fin conforme ou l'arrêt anticipé ou l'interruption du processus de dé-sulfatation précédent.

11. Procédé selon l'une des revendications précédentes, **caractérisé en ce que** la durée de préparation ou de chauffage propre nécessaire au réglage de l'état de dé-sulfatation et la durée de dé-sulfatation nécessaires pour réaliser la dé-sulfatation sont déterminées, et **en ce qu'**une poursuite du procédé de dé-sulfatation après dépassement d'une durée maximale autorisée de préparation et/ou de dé-sulfatation est considérée comme inadmissible.

12. Procédé selon l'une des revendications précédentes, **caractérisé en ce que** le nombre de dé-sulfatation réalisées après une dé-sulfatation préférée est déterminé et comparé avec un nombre minimum prédéterminé de dé-sulfatations successives et **en ce que**, lors de la survenue d'une nouvelle réduction d'activité du catalyseur de stockage de NOₓ (22) dépassant une valeur déterminée avant d'atteindre ce nombre minimum, d'autres dé-sulfatations sont considérées comme inadmissibles et/ou un signal correspondant se produit au niveau d'un dispositif de diagnostic embarqué coordonné au moteur à combustion interne (10).

13. Procédé selon l'une des revendications précédentes, **caractérisé en ce que** les paramètres de dé-sulfatation prédéterminés comprennent des plages déterminées de la température du catalyseur et de la valeur de lambda.

14. Procédé selon l'une des revendications précédentes, **caractérisé en ce que** l'étape de procédé d) et les étapes de procédé qui la suivent sont aussi d'emblée réalisées avant dépassement de la première valeur de seuil de charge en soufre lorsqu'une dé-sulfatation du catalyseur de stockage de NOₓ (22) est considérée comme nécessaire par un dispositif de diagnostic embarqué coordonné au moteur à combustion interne (10).

15. Procédé selon l'une des revendications précédentes, **caractérisé en ce que** le réglage des paramètres de dé-sulfatation nécessaires ne se fait qu'après écoulement d'une première durée prédéterminée et/ou après dépassement d'au moins une autre valeur de seuil de la charge en soufre.

16. Procédé selon l'une des revendications précédentes, **caractérisé en ce que** le réglage des paramètres de dé-sulfatation comprend les mesures suivantes, qui peuvent être prises séparément ou aussi en combinaison, en fonction du point d'exploitation et de la température des gaz d'échappement et du catalyseur :
1. exploitation homogène avec lambda ≈ 1 dans l'ensemble du diagramme caractéristique.
2. retard à l'allumage avec exploitation homogène.
3. accentuation du régime de ralenti en exploitation selon lambda ≈ 1.
4. accentuation de l'amplitude de régulation lambda et de la fréquence de régulation lambda en exploitation selon lambda ≈ 1.
5. exploitation avec mélange pauvre-riche par sélection de cylindre en exploitation selon lambda ≈ 1.
6. injection postérieure pendant ou après la fin de combustion :
a. en exploitation de base avec mélange pauvre à charge stratifiée selon lambda ∼1 ;
b. en exploitation de base avec mélange pauvre homogène selon lambda ≈1 ;
c. en exploitation homogène selon lambda ≈1 à lambda < 1.
7. admission d'air secondaire avec lambda << 1 en cas d'existence d'une pompe à air secondaire.

17. Procédé selon la revendication 16, **caractérisé en ce que** la valeur théorique de lambda, pendant l'éventualité de la dé-sulfatation par réglage de paramètres de dé-sulfatation appropriés, en partant d'une valeur de base de lambda, est corrigée via des courbes caractéristiques ou des diagrammes caractéristiques en fonction de la température des gaz d'échappement et/ou du régime de ralenti et/ou du débit d'injection et du point d'injection de l'injection homogène, à charge stratifiée ou postérieure et/ou de la fréquence d'ululation et de l'amplitude d'ululation du signal lambda et/ou de la différence de quantité injectée dans les cylindres et/ou du débit d'air amené en supplément par une pompe à air secondaire et/ou de la durée depuis le dépassement de la température du catalyseur pour lequel on utilise la dé-sulfatation.

18. Procédé selon la revendication 16 ou 17, **caractérisé en ce que** le catalyseur de stockage de NOₓ (22), pour un chauffage rapide à la température théorique de dé-sulfatation, est chauffé avec une température de première chauffe plus élevée jusqu'à ce que la température moyenne du catalyseur de stockage de NOₓ (22) corresponde à la température de dé-sulfatation souhaitée.

19. Procédé selon la revendication 18, **caractérisé en ce que** simultanément, sur la base de la température déterminée par la sonde de température des gaz d'échappement entre le catalyseur de stockage de NOₓ (22) et un pré-catalyseur (20) intercalé avant, la température du pré-catalyseur (20) et la température de première chauffe du catalyseur de stockage de NOₓ (22) sont contrôlées et régulées de façon telle qu'elles ne dépassent pas une température maximale autorisée déterminée du pré-catalyseur ou une température de première chauffe.

20. Procédé selon la revendication 19, **caractérisé en ce que** la température propre du pré-catalyseur (20) est déterminée par diagramme caractéristique à partir de la température des gaz d'échappement et du débit massique des gaz d'échappement mesurés, même la conversion des matières polluantes calculée au niveau du pré-catalyseur (20) étant prise en compte.

21. Procédé selon la revendication 20, **caractérisé en ce que** les émission brutes réelles de HC, CO, NOₓ, H₂, O₂ avant le pré-catalyseur (20) sont déterminées par ajouts multiplicatifs de la température du réfrigérant et la dynamique régime-charge à partir d'un diagramme caractéristique des émissions brutes.

22. Procédé selon la revendication 21, **caractérisé en ce que**, à partir d'une température de plus de 300 °C, appropriée pour la dé-sulfatation, on part d'une conversion idéale des matières polluantes de 100 %, des réductions de cette valeur par la vitesse spatiale étant considérées.

23. Procédé selon la revendication 19, **caractérisé en ce que** la température de première chauffe mesurée est corrigée de la longueur et de l'exécution géométrique de la tubulure en amont, ainsi que de la circulation par la tubulure en amont de l'air ambiant.

24. Procédé selon la revendication 19, **caractérisé en ce que** la température de première chauffe maximale autorisée est calculée **en ce que** l'on soustrait d'une valeur brute l'augmentation de température par la conversion des matières polluantes résiduelles sur le catalyseur de stockage de NOₓ (22).

25. Procédé selon la revendication 24, **caractérisé en ce que** la conversion des matières polluantes résiduelles sur le catalyseur de stockage de NOₓ (22) est calculée à partir de la traversée des matières polluantes par le pré-catalyseur (20) et du débit massique des gaz d'échappement.

26. Procédé selon la revendication 16, **caractérisé en ce que** le retard à l'allumage lors d'une exploitation homogène (mesure 2) est uniquement initié au-delà d'une température maximale déterminée du réfrigérant, qui est corrigée par la température de l'air d'admission.

27. Procédé selon la revendication 16, **caractérisé en ce que** la spécification de l'angle d'allumage, lors d'une exploitation homogène, se conforme à l'angle d'allumage le plus tardif possible, et est corrigé par des courbes caractéristiques en fonction de la température du catalyseur et/ou des gaz d'échappement et/ou du régime de ralenti et/ou de la spécification de lambda.

28. Procédé selon la revendication 16, **caractérisé en ce que** la fréquence de régulation, l'amplitude de régulation et la pente des flancs, lors d'un appauvrissement ou d'un enrichissement, sont modifiées en fonction de la température d'un pré-catalyseur (20) et du catalyseur de stockage de NOₓ (22).

29. Procédé selon la revendication 28, **caractérisé en ce que** la modification de la fréquence de régulation et de l'amplitude de régulation est de - 50 à + 250 % ou de -20 à + 400 %, tandis que les différences de pente des flancs lors d'un passage à mélange pauvre ou enrichi sont de 10:1 à 1:10.

30. Procédé selon la revendication 16, **caractérisé en ce que**, pour réaliser l'exploitation avec mélange pauvre-riche par sélection de cylindre selon lambda ≈1, on définit au moins un facteur d'irrégularité du débit d'injection, qui indique l'étendue maximale autorisée du déséquilibre entre les cylindres, et **en ce que** l'angle d'allumage pour chaque cylindre est adapté de façon telle que le même moment est débité par tous les cylindres.

31. Procédé selon la revendication 30, **caractérisé en ce que** le facteur d'irrégularité au moins est déterminé par diagramme de caractéristique via la charge et le régime, et est corrigé par la température du moteur à combustion interne et la température des gaz d'échappement.

32. Procédé selon la revendication 31, **caractérisé en ce que**, lors de l'approchement de la température maximale autorisée du pré-catalyseur ou du catalyseur de stockage, une correction supplémentaire est réalisée.

33. Procédé selon la revendication 16, **caractérisé en ce qu'**en cas de différence de quantité injectée dans les cylindres, on définit une différence maximale qui est corrigée par la température du moteur à combustion interne (10), la température d'un pré-catalyseur (20) et la température du catalyseur de stockage de NOₓ (22).

34. Procédé selon la revendication 33, **caractérisé en ce que** la différence maximale va statistiquement jusqu'à ± 50 %.

35. Procédé selon la revendication 34, **caractérisé en ce que** la valeur statique est corrigée au maximum de ± 95 % par rapport à la déviation.

36. Procédé selon la revendication 16, **caractérisé en ce que** le débit d'injection postérieure lors de l'injection postérieure suivant la fin de la combustion est calculé via la différence entre la valeur lambda de la chambre de combustion calculée et une valeur lambda spécifiée de la chambre de combustion.

37. Procédé selon la revendication 36, **caractérisé en ce que** le contrôle et la correction du débit d'injection postérieure sont réalisés via la valeur lambda mesurée des gaz d'échappement, le moment d'injection étant défini en fonction du moment d'allumage, du débit, de la charge et du régime de façon telle que la quantité de carburant injectée en supplément n'est plus brûlée, mais qu'une évacuation totale dans le cycle d'expulsion soit possible.

38. Procédé selon la revendication 37, **caractérisé en ce que**, pour permettre la dé-sulfatation, un signal lambda calculé reposant sur le processus de combustion sans injection postérieure est transmis, dans le cas où un signal de retour des signaux lambda est nécessaire pour mesurer le débit d'injection homogène ou par charge stratifiée.

39. Procédé selon l'une des revendications 36 à 38, **caractérisé en ce que**, lors de l'injection postérieure pendant la fin de la combustion, une correction supplémentaire, conforme au diagramme caractéristique, du débit d'injection de l'injection principale est réalisée.

40. Procédé selon la revendication 39, **caractérisé en ce que** la quantité de carburant d'injection postérieure encore brûlée et le rendement de cette fraction de combustion sont déterminés en fonction du moment d'injection, de la durée d'injection, du moment d'allumage et du régime, et que la quantité de l'injection principale est réduite en conséquence.

41. Procédé selon l'une des revendications 36 à 40, **caractérisé en ce que** l'injection postérieure est entretenue pendant ou après la fin de la combustion lors d'une exploitation homogène avec lambda ≈1 à lambda < 1, par insufflation d'air secondaire.

42. Procédé selon la revendication 41, **caractérisé en ce que** l'évolution de la température d'un pré-catalyseur (20) et du catalyseur de stockage de NOₓ(22) est prise en compte, suite à quoi, outre la température calculée, le gradient de température agit aussi par indication de limite en cas d'approchement des températures maximales autorisées respectives.

43. Procédé selon l'une des revendications précédentes, **caractérisé en ce que** la valeur lambda spécifiée pendant la dé-sulfatation est modifiée dans le temps au plus tard en cas de dépassement de la température du catalyseur, à laquelle on effectue une dé-sulfatation.

44. Procédé selon la revendication 43, **caractérisé en ce que** l'on définit d'abord une valeur de base de lambda, qui dépend de la température du catalyseur de stockage de NOₓ (22), et que l'on corrige, via la charge réelle en soufre et via la charge en soufre au moment de l'éventualité d'une dé-sulfatation, en une valeur spécifiée lambda quasi-statique pour la réalisation de la dé-sulfatation.

45. Procédé selon la revendication 44, **caractérisé en ce que** la valeur spécifiée lambda quasi-statique et qui ne peut être modifiée que lentement est combinée à une oscillation modifiable en fréquence, en amplitude et en régulation, laquelle dépend de la valeur spécifiée de lambda elle-même, de la charge en soufre réelle, de la charge en soufre au moment de l'éventualité d'une dé-sulfatation, de la température du catalyseur et de la déviation entre activité du catalyseur mesurée et calculée.

46. Procédé selon la revendication 45, **caractérisé en ce que** la pente du flanc d'appauvrissement en enrichissement est comprise entre 10:1 et 1:10.

47. Procédé selon l'une des revendications précédentes, **caractérisé en ce que** la température du catalyseur de stockage de NOₓ (22) est contrôlée pendant le processus de dé-sulfatation.

48. Procédé selon la revendication 47, **caractérisé en ce que** les mesures permettant d'augmenter la température du catalyseur, en cas de dépassement d'une valeur de seuil de la température de catalyseur à respecter au moins pendant la dé-sulfatation, sont annulées tant que la température théorique de dé-sulfatation spécifiée pour la dé-sulfatation demeure dans les limites prédéterminées.

49. Procédé selon la revendication 48, **caractérisé en ce que** les limites prédéterminées vont de ± 50 à ± 150 °C.

50. Procédé selon la revendication 48 ou 49, **caractérisé en ce que** la température théorique de dé-sulfatation est calculée à partir de la charge réelle en soufre du catalyseur de stockage de NOₓ (22) et de la charge en soufre au début du processus de dé-sulfatation.

51. Procédé selon l'une des revendications 48 à 50, **caractérisé en ce que** la température théorique de dé-sulfatation est corrigée conformément à la déviation déterminée entre activité du catalyseur mesurée et calculée.

52. Procédé selon l'une des revendications précédentes, **caractérisé en ce que** la température du catalyseur, lors d'une interruption du processus de dé-sulfatation, est conservée par des mesures atténuantes de maintien en température et que la valeur de lambda est repoussée dans la zone du régime pauvre tant qu'il ne se produit plus de dé-sulfatation.

53. Procédé selon la revendication 52, **caractérisé en ce que** la température du catalyseur est abaissée à une valeur normale de fonctionnement lorsque le processus de dé-sulfatation initié ne peut se poursuivre pendant une seconde durée prédéterminée.

54. Procédé selon l'une des revendications précédentes, **caractérisé en ce que** le modèle de déviation caractéristique prédéterminé entre l'émission d'oxyde d'azote prédéterminée et celle mesurée selon l'étape de procédé h) comprend en plus ou aussi en alternance avec les déviations par rapport au comportement normal de fonctionnement selon l'étape de procédé g), également la survenue de pics d'émission de NOₓ caractéristiques au début et/ou à la fin d'une régénération des NOₓ, qui peut atteindre le niveau des émissions brutes et même le dépasser de plus de 100 %.
